Europäisches Patentamt

European Patent Office

Office européen des brevets

(19)

(11) **EP 0 596 437 B2**

(12) # NEUE EUROPÄISCHE PATENTSCHRIFT

(45) Veröffentlichungstag und Bekanntmachung des Hinweises auf die Entscheidung über den Einspruch:
**30.01.2002 Patentblatt 2002/05**

(45) Hinweis auf die Patenterteilung:
**01.10.1997 Patentblatt 1997/40**

(21) Anmeldenummer: **93117666.3**

(22) Anmeldetag: **02.11.1993**

(51) Int Cl.⁷: **C08L 3/02**
// C08L87/00

(54) **Biologisch abbaubare Polymermischung**

Biodegradable polymer blend composition

Mélange de polymères biodégradable

(84) Benannte Vertragsstaaten:
**AT BE CH DE DK ES FR GB GR IE IT LI LU MC NL PT SE**

(30) Priorität: **06.11.1992 DE 4237535**

(43) Veröffentlichungstag der Anmeldung:
**11.05.1994 Patentblatt 1994/19**

(73) Patentinhaber: **bio-tec Biologische Naturverpackungen GmbH & Co. KG 46446 Emmerich (DE)**

(72) Erfinder: **Tomka, Ivan, Dr. CH-1722 Bourguillon (CH)**

(74) Vertreter: **Troesch Scheidegger Werner AG Patentanwälte Postfach 8032 Zürich (CH)**

(56) Entgegenhaltungen:
**EP-A- 0 045 621          EP-A- 0 409 781**
**EP-A- 0 444 880          EP-A- 0 542 155**
**WO-A-91/16375          WO-A-92/19680**
**WO-A-92/20740          CA-A- 2 084 994**
**US-A- 3 485 777          US-A- 3 850 863**

• **PATENT ABSTRACTS OF JAPAN vol. 17, no. 114 (M-1377) 9. März 1993 & JP-A-04 299 131 (DAINIPPON PRINTING CO LTD) 22. Oktober 1992 & DATABASE WPI Week 9249, Derwent Publications Ltd., London, GB; AN 402561**

EP 0 596 437 B2

**Beschreibung**

Die vorliegende Erfindung betrifft eine biologisch abbaubare Polymermischung, im wesentlichen bestehend aus Stärke und mindestens einem hydrophoben biologisch abbaubaren Polymeren, ein Verfahren für die Herstellung einer biologisch abbaubaren Polymermischung, im wesentlichen bestehend aus Stärke und mindestens einem hydrophoben biologisch abbaubaren Polymer, sowie eine Ein- oder Mehrschichtfolie, wobei als hydrophobes biologisch abbaubares Polymer mindestens ein aliphatischer Polyester vorliegt.

Für die Bewältigung der Abfallproblematik werden die Kunststoffe je länger, je mehr miteinbezogen, nicht zuletzt deshalb, da ihr Anteil als Folge der steigenden Verwendung als Werkstoffe bzw. Halbwerkzeuge oder Rohstoffe bei der Abfallverwertung ständig steigt. Im Gegensatz zu anderen Werkstoffen, wie beispielsweise Glas oder Metall, ist ein Recycling bei Kunststoffen, obwohl wiederholt versucht, sehr problematisch, da es fast unmöglich ist, die verschiedensten Kunststofftypen getrennt zurückzuführen, was an sich notwendig wäre, um Kunststoffe wieder vernünftig einsetzen zu können.

Aus diesem Grunde muss davon ausgegangen werden, dass immer grössere Mengen an Kunststoff zu entsorgen sind, weshalb die Bedeutung von sogenannten abbaubaren Kunststoffen bzw. Polymeren zunimmt. Dabei sind vor allem die biologisch abbaubaren Polymere von Interesse, welche unter der Wirkung von Mikroorganismen, Bakterien, Pilzen, Enzymen oder dergleichen abgebaut werden und als niedermolekulare Produkte kaum mehr zur Last fallen.

Die wohl am weitest verbreiteten Biopolymere sind in den meisten Fällen auf Stärke aufgebaut, wobei allerdings Stärke als technisch brauchbares Polymer kaum geeignet ist. Polymermischungen mit Stärke sind bekannt, wobei die Stärke oder auch andere Biopolymere vorzugsweise aufgrund ihrer biologischen Abbaubarkeit, aufgrund ihres günstigen Preises und aufgrund der Unabhängigkeit von Erdölprodukten verwendet werden.

In diversen Patentschriften wird die Verwendung von Biopolymeren als technischer Kunststoff beschrieben. In der EP-011 92 40, EP-28 24 51, EP-28 89 20, EP-30 44 01, EP-32 65 14, GB-22 14 919 und der EP-32 75 05 wird beschrieben, wie native Stärke, Gelatine oder andere Biopolymere modifiziert resp. destrukturiert werden, um als technische Polymere verwendet werden zu können. Dabei geschieht dies durch Extrusion oder Kneten der Stärke oder des Biopolymeren unter Zuhilfenahme des im Biopolymeren oder der Stärke aufgenommenen Wassers oder durch Zusetzen weiteren Wassers, wobei aber eben der vorhandene, relativ grosse Wassergehalt beispielsweise bei der Extrusion des so destrukturierten Biopolymers äusserst unerwünscht ist.

Demgegenüber wird in der WO-A-90/05161 vorgeschlagen, native Stärke wasserfrei und unter Verwendung von Zuschlagstoffen resp. Weichmachern oder Quellmitteln, wie beispielsweise Glycerin, in ein technisch brauchbares Polymer, d.h. in sogenannte thermoplastisch verarbeitbare Stärke umzuwandeln. Wohl ist die Verarbeitbarkeit und die Wasserresistenz dieses Stärkepolymers wesentlich besser als die gemäss den oben beschriebenen Herstellverfahren erzeugten Stärkepolymeren, jedoch sind die mechanischen Eigenschaften und insbesondere die Wasserresistenz nach wie vor für viele technische Anwendungen, wie insbesondere zur Herstellung von Folien, ungenügend.

Aus diesem Grunde wird in einer Vielzahl von Patentschriften vorgeschlagen, die Stärke mit weiteren Polymeren zu versetzen, um so Eigenschaften zu erzielen, die einen technischen Einsatz zulassen. So wird in der CH-644 880, CH-644 881, DE-PS-24 62 802 und DE-24 55 732 vorgeschlagen, Stärke zunächst mit irgendwelchen Additiven oberflächenzubehandeln und anschliessend mit thermoplastischen Polymeren, wie Polyethylen usw., zu vermischen. In der DE-OS-40 38 732 wird ein Werkstoff vorgeschlagen auf Basis von Stärke unter Zusatz von Wasser und Plastifiziermitteln sowie einer wässrigen Polymerdispersion, gebildet aus einem thermoplastischen Polymeren.

Im Gegensatz zu den obgenannten Dokumenten wird in den Patentschriften, wie EP-40 28 26, EP-40 47 23, EP-40 47 27, EP-40 27 28, EP-40 73 50, EP-40 97 88, EP-41 78 28, EP-0 32 802, US-39 52 347, US-50 95 054 und AT-365 619, anstelle von nativer Stärke von destrukturierter Stärke, gelatinisierter Stärke oder plastifizierter Stärke ausgegangen, die mit thermoplastischen Kunststoffen, wie Polyolefinen, Polyalkoholen, ABS-Copolymeren, Ethylen-Acrylsäure-Copolymeren, Copolymeren von Vinylpyrrolidinen, Copolymeren mit Aminogruppen etc., vermischt werden. Bei allen obgenannten Polymermischungen, basierend auf Stärke, ergibt sich das Problem, dass die Verträglichkeit zwischen Stärke und den weiteren Polymeren ungenügend ist resp. die Phasendurchmischung der einzelnen Polymere schlecht ist. Bekanntlich ist Stärke äusserst hydrophil, währenddem in der Regel die für das Mischen verwendeten Polymere hydrophob sind. Letztendlich ist die biologische Abbaubarkeit aller genannten Polymermischungen nach wie vor ungenügend, indem die Abbauzeit der verwendeten Polymere, bei denen es sich in der Regel um synthetische Polymere handelt, viel zu lange ist, so dass kaum von biologischer Abbaubarkeit gesprochen werden kann.

Zur Verbesserung der mechanischen Eigenschaften wird in einer Reihe von Patentschriften, wie der WO90/10671, der WO91/02023 und der WO91/02025 vorgeschlagen, zunächst bei hohem Wassergehalt die Stärke zu destrukturieren und anschliessend beim Herstellen der Polymermischung beim Mischvorgang mit einem Ethylen-Copolymeren den Wassergehalt auf unter 6% zu reduzieren. In der WO92/02363 wird zudem vorgeschlagen, der Polymermischung ein hochsiedendes Plastifiziermittel zuzusetzen, währenddem in der WO92/01743 desselben Anmelders der Polymermischung eine Borverbindung beigemengt wird. In der DE-39 39 721 wird werter vorgeschlagen. einer Polyvinyl-Alkohol-Stärke-Mischung für die Herstellung von Folien zusätzlich ein Vernetzungsmittel beizufügen.

Für die Erhohung der biologischen Abbaubarkeit wiederum schlägt die WO88/06609 vor, einer Polymermischung, bestehend aus Polyethylen und Stärke bzw. modifizierter Stärke eine Eisenverbindung sowie eine Fettsäure beizumengen. In der EP-282 368 wiederum wird eine biologisch abbaubare Mischung vorgeschlagen, hergestellt aus Polyurethan, PVC mit Weichmacher, einem Kohlehydrat, wie Stärke, sowie einem aliphatischen Polyester, wobei Polyurethan unter anderem, basierend auf Polycaprolacton, vorgeschlagen wird. Bei allen obgenannten Dokumenten im Stande der Technik zeigt sich deutlich, dass immer einige Eigenschaften durch die gewählte Lösung verbessert werden. währenddem andere darunter leiden. So wird zwischen den Eigenschaften, wie Wasserresistenz, biologische Abbaubarkeit. sowie mechanische Eigenschaften immer ein Kompromiss eingegangen, um einige dieser Eigenschaften verbessern zu können.

So zeigt sich beispielsweise bei der Herstellung von Folien aus einer Polymermischung, vorgeschlagen gemäss einem Grossteil der oben genannten Dokumente, dass der in den vorgeschlagenen Mischungen vorhandene Nichtstärkeanteil an Polymer für sich allein als Folie hergestellt, d.h. mit entsprechend wesentlich dünnerer Wandstärke ausgebildet, wesentlich bessere Reissfestigkeit aufweist als die entsprechend aus der gesamten Polymermischung hergestellten dickeren Folien, Der Grund dafür liegt entweder in der hohen Wasseraufnahme oder aber in der schlechten Phasendurchmischung zwischen den verschiedenen Polymeren.

Gemäss den Patentschriften EP-40 05 31 und EP-40 05 32 wird vorgeschlagen, die Stärke analog der WO90/05161 mittels eines hochsiedenden Weichmachers, wie Glycerin, Harnstoff oder Sorbitol, zu behandeln, um thermoplastisch verarbeitbare Stärke zu erhalten, um diese anschliessend mit Ethylen-Acrylsäure- und/oder Polyvinylalkohol-Copolymeren zu mischen. Aus diesen Stärke/Polymermischungen hergestellte Folien weisen wohl eine bessere Reissfestigkeit auf, sind aber nach wie vor zu feuchtigkeitsempfindlich.

Dasselbe trifft auf Stärkepolymermischungen zu, welche gemäss der WO90/14388 hergestellt werden, wobei hier zu Glycerin-Stärke-Polyethylen und Ethylen-Acrylsäure-Copolymere zugemischt werden.

In der WO91/16375 wiederum wird für die Herstellung von Folien ein Polymerblend vorgeschlagen, der thermoplastisch verarbeitbare Stärke gemäss der WO90/05161 verwendet, zusammen mit einem Polyolefin sowie einem Phasen- oder Haftvermittler, um die Phasendurchmischung zwischen der Stärke und dem Polyolefin zu verbessern. Aehnlich wird in der nicht vorveröffentlichten WO-A-92/020740 vorgeschlagen, thermoplastisch verarbeitbare Stärke mit mindestens einem Polyolefin sowie mindestens einem Ethylen-Acrylat-Maleinsäureanhydrid-Copolymeren zu mischen, wobei das Veresterungsprodukt zwischen der Stärke und dem zugesetzten Copolymeren als Phasenvermittler zwischen der Stärkephase und der Polymerphase dient. Der Vorteil dieser Polymermischung liegt darin, dass aufgrund der guten Durchmischung der Stärkephase mit der weiteren Polymerphase, wie beispielsweise der hydrophoben Polyolefinphase, beim Herstellen beispielsweise von Folien ausgezeichnete mechanische Eigenschaften erzielt werden können.

Allerdings haben auch alle diese Polymermischungen den gewichtigen Nachteil, dass deren biologische Abbaubarkeit den heute an eine derartige Abbaubarkeit gestellten Anforderungen keinesfalls genügen können.

Im Zusammenhang mit biologisch abbaubaren Polymeren wird daher seit einiger Zeit eine von Stärke losgelöste Stossrichtung verfolgt, indem beispielsweise aliphatische Polyester die Caprolacton- oder Polyhydroxy-Buttersäure/ Hydroxyvaleriansäure-Copolymere (Biopol) entwickelt wurden, die biologisch einwandfrei abgebaut werden können. Das Problem dieser Produkte liegt aber darin, dass sie in der Herstellung sehr teuer sind, weshalb ein Einsatz als technischer Massekunststoff nicht in Frage kommt.

In diesem Zusammenhang sei auf ein Artikel in der Zeitschrift Capital 6/92, S. 208, "Wunderfolien reduzieren Plastikmüll", verwiesen, wo derartige neue Entwicklungen beschrieben sind. Ein weiterer grosser Vorteil dieser neu entwickelten Materialien liegt darin, dass sie hydrophob sind und somit wasserresistent, dies im Gegensatz zu Stärke, die sehr hydrophil ist. Dieser Unterschied bringt es aber mit sich, dass ein "Strecken" der erwähnten teuren, biologisch abbaubaren Polymeren mit Stärke das Problem beinhaltet, dass zwei nicht mischbare Phasen vorliegen. Diese Nicht-Mischbarkeit der Stärke mit den erwähnten hydrophoben, biologisch abbaubaren Polymeren führt wiederum dazu, dass so hergestellte Mischpolymere schlechte mechanische Eigenschaften ergeben, womit wieder die ursprünglich oben angeführte Problematik angesprochen ist, dass zwischen Wasserlöslichkeit, biologischer Abbaubarkeit und den mechanischen Eigenschaften Kompromisse einzugehen sind.

In der US-3 850 863 werden biologisch abbaubare thermoplastische Oxyalkanoyl-Polymere vorgeschlagen, beispielsweise enthaltend ε-Caprolacton-Polymere, gemischt mit Maisstärke. In der internationalen Patentanmeldung WO 92/19680 wiederum werden biologisch abbaubare Polymerzusammensetzungen beschrieben, basierend auf Stärke und einem thermoplastischen Polymer. U.a. wird ebenfalls Polycaprolacton als mögliche Mischkomponente zur Stärke beschrieben. Die so beschriebenen Polymermischungen erfüllen wohl in der Regel die Forderungen an biologische Abbaubarkeit, doch genügen daraus hergestellte Fabrikate wiederum nicht den Anforderungen an die gestellten mechanischen Eigenschaften, womit die oben angeführte Problematik auch in bezug auf die beiden genannten an sich biologisch abbaubaren Materialien Gültigkeit besitzt. In der am Anmeldetag der vorliegenden Anmeldung noch nicht veröffentlichten EP 0 542 155 wird eine biologisch abbaubare Formmasse beschrieben, aufweisend thermoplastisch verarbertbare Stärke sowie ein Cellulose-Derivat, wie beispielsweise Celluloseester. Dabei wird unter anderem beispielsweise vorgeschlagen, epoxidiertes Sojaöl als Phasenvermittler zu verwenden, wobei mittels Infraspektroskopie nachgewiesen werden konnte, dass teilweise die Epoxidgruppen mit der Stärke und/oder dem Glyzerin reagieren.

Die Aufgabe der vorliegenden Erfindung besteht nun darin, eine Lösung für die vorab angeführte Problematik vorzuschlagen, indem eine Polymermischung geschaffen wird, die sowohl gute Wasserresistenz aufweist, biologisch einwandfrei abbaubar ist und zusätzlich gute mechanische Eigenschaften ergibt, damit ein Einsatz als Massekunststoff in Frage kommt. Eine weitere Voraussetzung für die Eignung als Massekunststoff liegt nicht zuletzt aber auch darin, dass der Preis für die aufgabegemäss vorzuschlagende Polymermischung eine akzeptable Grösse umfasst.

Erfindungsgemäss wird die vorab vorgeschlagene Aufgabe mittels einer biologisch abbaubaren Polymermischung gemäss dem Wortlaut nach Anspruch 1 gelöst.

Vorgeschlagen wird eine biologisch abbaubare Polymermischung mit einem Wassergehalt von weniger als 1 Gew%, bezogen auf das Gesamtgewicht des Mischung bestehend im wesentlichen aus Stärke und mindestens einem hydrophoben biologisch abbaubaren Polymer, erhalten durch Mischen in Schmelze von Stärke oder von thermoplastischer Stärke mit einem hydrophoben Polymer, das thermoplastisch verarbeitbar ist und einem Phasenvermittler bzw. einem makromolekularen Dispergiermittel, wobei epoxidiertes Sojaöl davon ausgenommen ist, oder einem in der hydrophoben Polymerphase löslichen weiteren Polymer mit gegenüber Stärke reaktiven Gruppen, wobei als hydrophobes Polymer mindestens ein aliphatischer Polyester vorliegt, und wobei beim Mischen der Wassergehalt auf unter 1 Gew% bezogen auf das Gesamtgewicht der Mischung reduziert wird, wobei in der Mischung die Stärke als disperse Phase mit dem hydrophoben Polymer als kontinuierliche Phase vorliegt und der Phasenvermittler bzw. das Dispergiermittel für die molekulare Koppelung der beiden Phasen verantwortlich ist.

Die vorgeschlagene Polymermischung basiert damit auf dem gleichen Prinzip wie in der zum Zeitpunkt der Anmeldung nicht vorveröffentlichten WO-A-92/020740 dargelegt, wobei überraschenderweise die in der genannten internationalen Patentvorgeschlagenen Phasenvermittler ebenfalls geeignet sind, die molekulare Kopplung zwischen den beiden Phasen zu bewerkstelligen.

Im weiteren wird analog der WO-A-92/020740 vorzugsweise von thermoplastisch verarbeitbarer Stärke ausgegangen, wie sie beispielsweise in der WO90/05161 oder der WO91/16375 vorgeschlagen wird. In analoger Art und Weise wird deshalb erfindungsgemäss vorgeschlagen, die Stärke als sogenannte thermoplastisch verarbeitbare Stärke (TPS) vorzulegen, die dadurch erhalten wird, indem native Stärke im wesentlichen wasserfrei mit mindestens einem Plastifizier- oder Quellmittel in der Grössenordnung von 15 bis 40Gew%, bezogen auf das Gewicht der Mischung, gemischt wird, wobei das verwendete Plastifizier- oder Quellmittel dazu geeignet ist, die Stärke bzw. Derivate davon mindestens anzuquellen oder diese anzulösen.

Als geeignete Quell- oder Plastifiziermittel für die Herstellung der thermoplastisch verarbeitbaren Stärke eignen sich insbesondere unter anderem Sorbitol, Glycerin, Hydroxysäuren, wie beispielsweise Milchsäure und deren Salze, sowie Polyvinylalkohol. Daneben eignen sich aber auch alle Quell- oder Plastifiziermittel bzw. auch Zuschlagstoffe genannt, wie sie in den beiden obgenannten internationalen Patentanmeldungen zur Herstellung von thermoplastisch verarbeitbarer Stärke verwendet werden.

Der wesentliche Vorteil der erfindungsgemäss erzeugten Polymermischung gegenüber allen bekannten, im Stande der Technik beschriebenen Polymermischungen liegt darin, dass, basierend auf Stärke, ein thermoplastisch verarbeitbarer, technischer "Kunststoff" vorliegt, der weitgehendst wasserunempfindlich ist, da das hydrophobe Polymer als kontinuierliche Phase bzw. als Matrix in der Mischung vorliegt und anderseits die Polymermischung einwandfrei und innerhalb vernünftiger Zeit biologisch abbaubar ist, da das hydrophobe Polymer selbst gute biologische Abbaubarkeit aufweist.

Damit nun die hydrophile Stärkephase und die hydrophobe Potymerphase gute Durchmischbarkeit aufweisen resp. die Stärke im hydrophoben Polymer einwandfrei dispergierbar ist, ist der erfindungsgemässe Phasenvermittler bzw. ein makromolekulares Dispergiermittel vorgesehen, wobei der Phasenvermittler einerseits ein Blockcopolymeres sein kann, welches mindestens zwei Blöcke umfasst, wovon der eine Block in der hydrophoben Polymerphase wenigstens weitgehendst löslich ist und der andere Block wenigstens weitgehendst löslich ist in der Stärkephase.

Der Phasenvermrttler kann aber auch durch ein reaktives weiteres Polymer gebildet werden, das in der hydrophoben Polymerphase weitgehendst löslich ist und gegenüber der Stärke reaktive Gruppen umfasst, welche mit mindestens einem Teil der Stärke reagieren und so in der Mischung den Phasenvermittler bildet, der für die oben erwähnte molekulare Kopplung der beiden Phasen verantwortlich ist.

Gemäss einer weiteren erfindungsgemässen Variante kann zur Bildung des Phasenvermittlers von einem hydrophoben Polymer der obgenannten Art ausgegangen werden, welches Polymer in der Molekülkette eingebaute Estergruppen aufweist, welche bei erhöhter Temperatur nach deren Zerfall reaktiv werden und wenigstens teilweise mit mindestens einem Teil der Stärke bzw. der thermoplastisch verarbeitbaren Stärke reagieren. Die so mit der Stärke bzw. der thermoplastisch verarbeitbaren Stärke reagierten Molekülketten des hydrophoben Polymers bilden in der Mischung den Phasenvermittler, der emeut für die molekulare Kopplung der beiden Phasen verantwortlich ist.

Bei der erfindungsgemäss hergestellten Polymermischung ist es nun aber wesentlich, dass in jedem Falle die thermoplastisch verarbeitbare Stärke als disperse Phase vorliegt, weshalb die Stärke nur bis zu einem maximalen Anteil in der Mischung vorliegen kann, bis zu welchem Anteil das hydrophobe Polymer immer noch als weitgehendst zusammenhängende, kontinuierliche Phase vorliegt. Sobald beispielsweise die beiden Phasen in gleicher Funktion in der Mischung vorliegen, d.h. sowohl als kontinuierliche wie auch das disperse Phase, so ist die Wasserresistenz der Polymermischung nicht mehr gewährleistet. In der Praxis hat es sich gezeigt, dass die thermoplastisch verarbeitbare Stärke bis zu einem Anteil von maximal 70Gew%, bezogen auf das Gesamtgewicht der Mischung, in der Polymermischung vorliegen kann, wobei die Stärke immer noch in einer dispersen Phase vorliegt. Wird der Stärkeanteil zu klein gewählt, entsteht erneut das Problem, dass der hohe Preis der hydrophoben, biologisch abbaubaren Polymere zu stark ins Gewicht fällt. Entsprechend liegt die thermoplastisch verarbeitbare Stärke in der erfindungsgemässen Polymermischung sinnvollerweise mit einem Mengenanteil im Bereich zwischen 30 bis 70Gew% vor, vorzugsweise 50 bis 65Gew%, bezogen auf das Gesamtgewicht der Mischung.

Zusätzlich zu den aliphatischen Polyestern, wie Caprolacton, Polyhydroxy-Buttersäure, Polyhydroxy-Butlersäure/Hydroxy-Valeriansäure-Copolymere und Poly-Milchsäure eignen sich als hydrophobe, biologisch abbaubare, thermoplastisch verarbeitbare Polymere insbesondere die nachfolgend angeführten Polymere:

- Cellulosederivate mit einem Substitutionsgrad ≤ 2, wie Celluloseäther, Celluloseester oder -mischester;

- hydrophobe Proteine, wie Zein; und/oder

- Polyvinylalkohol, hergestellt durch nicht hundertprozentige Hydrolisierung von Polyvinylacetat, vorzugsweise mit einem Hydrolisierungsgrad von ca. 88%.

Als Beispiel für einen Celluloseäther sei Cellulose-Diethyläther (CdE) genannt, der beispielsweise mit Diethyl-Tartarat als Weichmacher bei ca. 190°C thermoplastisch verarbeitbar ist und das biologisch abbaubar ist. Die maximale Wasseraufnahme bei 20°C in Wasser beträgt nur gerade 0,04 Gewichtsanteile.

Als Beispiel für Celluloseester sei Cellulose-diacetat (CdA) oder als Mischester Cellulose-Acetat-Butyrat genannt, die mit Weichmachern bei 180°C thermoplastisch verarbeitbar sind und die biologisch abbaubar sind. Die maximale Wasseraufnahme bei 20°C in Wasser beträgt nur gerade 0,05 Gewichtsanteile.

Beide obgenannten Beispiele für Cellulosederivate werden heute im Markt zu Preisen in der Grössenordnung von Sfr. 12.--/kg angeboten.

Caprolacton kann ohne Weichmacher bei 120°C verarbeitet werden, ist teilkristallin mit einem Schmelzpunkt zwischen 60 und 80°C und einer glasigen Erstarrung bei -50°C. Die mechanischen Eigenschaften sind vergleichbar mit denjenigen von low density-Polyethylen. Die maximale Wasseraufnahme bei 20°C ist < 0,01 Gewichtsanteil, zudem ist Caprolacton biologisch abbaubar. Die Preise bewegen sich in der Grössenordnung von Fr. 10.-- bis Fr. 12.--/kg.

Polyhydroxy-Buttersäure/Hydroxyvaleriansäure-Copolymere sind thermoplastisch verarbeitbar, weisen gute mechanische Eigenschaften sowie niedrige Wasseraufnahme von < 0,01 Gewichtsanteile auf und sind zudem gut biologisch abbaubar. Der relativ hohe Preis von Fr. 30.-- bis Fr. 50.--/kg limitiert hingegen den Einsatz dieser Polymere.

Dasselbe trifft für Poly-Milchsäure zu, die, obwohl thermoplastisch gut verarbeitbar, gute mechanische Eigenschaften aufweisend sowie biologisch abbaubar, kaum zum Einsatz kommt, da deren Preis in der Grössenordnung von Fr. 1'000. -- bis Fr. 3'000.--/kg liegt.

Als hydrophobes Protein wird Zein vorgeschlagen, das thermoplastisch verarbeitbar ist mit 0,2 Gewichtsanteilen von Laurinsäure oder Diaethyltartrat bei 130°C. Zein ist im weiteren biologisch abbaubar, und die Kosten liegen in der Grössenordnung von Fr. 20.--bis Fr. 30.--/kg. Ein Nachteil von Zein liegt in der relativ hohen Wasseraufnahme, die deutlich über 0,1 Gewichtsanteile liegt.

Schlussendlich sei noch Polyvinylalkohol genannt, bekannt unter dem Markennamen Moviol, wobei vorteilhafterweise das zur Herstellung verwendete Polyvinylacetat 88%ig hydrolisiert wird.

Wie bereits oben erwähnt, ist es möglich, zwei verschiedene Gruppen von Phasenvermittlern zu verwenden. Zum einen werden Phasenvermittler vorgeschlagen, die sowohl verträglich sind gegenüber thermoplastisch verarbeitbarer Stärke und gleichzeitig gegenüber dem hydrophoben Polymeren. Aufgrund der unterschiedlichen Kohäsionsenergiedichten von Stärke und den hydrophoben Polymeren kommen nur Block-Copolymere in Frage, und zwar solche, die aus einem in Stärke löslichen Block und aus einem in der hydrophoben Polymerphase löslichen Block bestehen. Wesentlich dabei ist natürlich, dass der Phasenvermittler ebenfalls biologisch abbaubar ist und thermoplastisch einwandfrei verarbeitet werden kann. Als Beispiel hierzu sei ein Polycaprolacton/Polyvinylalkohol-Copolymer genannt. Anteil-mässig kann ein derartiger Phasenvermittler bis zu 100%, bezogen auf das Gewicht des hydrophoben Polymers, beigefügt werden, vorzugsweise aber werden nur in der Grössenordnung von 5 bis 50Gew% eines derartigen Polymers für die Herstellung der erfindungsgemässen Polymermischung verwendet.

Die andere Gruppe von Phasenvermittlern umfasst Reaktionsprodukte zwischen einem weiteren biologisch abbaubaren Polymeren mit der Stärke, das gegenüber der Stärke reaktive Gruppen aufweist und das verträglich ist mit der hydrophoben Polymerphase, wobei diese reaktiven Gruppen beispielsweise Epoxygruppen oder auch Säureanhydridgruppen umfassen können. Diese reaktiven Gruppen reagieren nun mit einem Teil der Stärke und bilden so in der Polymermischung den Phasenvermittler, der für die molekulare Kopplung der beiden Phasen verantwortlich ist.

Ein derartiger Phasenvermittler kann wiederum bis zu 100Gew%, bezogen auf das Gewicht des hydrophoben Polymers, in der Polymermischung anwesend sein, wobei die Polymermischung vorzugsweise einen Phasenvermittleranteil von 5 bis 50Gew%, bezogen auf das Gewicht des hydrophoben Polymers, umfasst.

Das für die Herstellung dieser Art Phasenvermittler verwendete weitere Polymer kann dabei ein hydrophobes Polymer sein, entnommen der oben angeführten Liste für hydrophobe Polymere, die in der Polymermischung Verwendung finden. Dabei wird eines der angeführten Polymeren mit reaktiven Gruppen versehen, wie beispielsweise mrt Epoxidgruppen oder mit Säureanhydridgruppen, die dann beim Herstellen der Polymermischung mit der Stärke reagieren Im Prinzip wäre es natürlich denkbar, dass das hydrophobe Polymer gänzlich durch ein derartiges weiteres Polymer ersetzt wird, womit schlussendlich die Polymermischung nur aus thermoplastisch verarbeitbarer Stärke und dem Phasenvermittler bestehen würde.

Das Einführen der reaktiven Gruppen erfolgt dabei, indem auf einem hydrophoben Polymeren, wie beispielsweise einem Polymeren gemäss der oben angeführten Liste, mittels Vinylpolymerisation oder Kondensation die reaktiven Gruppen aufgepropft werden, wobei dies für die Epoxidgruppen mittels eines Glycidäthers erreicht wird und für Säureanhydridgruppen beispielsweise mit Bernsteinsäureanhydrid. Selbstverständlich ist es aber auch möglich, andere reaktive Gruppen vorzusehen, die mit den Stärkemolekülen reagieren können.

Demgegenüber ist es aber auch möglich, einen erfindungsgemäss definierten Polymerblend herzustellen, bei dessen Herstellung auf das Verwenden eines extern zugesetzten Phasenvermittlers verzichtet werden kann, indem sich der Phasenvermittler während der Herstellung der Polymermischung von selbst einstellt. Dabei wird erfindungsgemäss vorgeschlagen, dass als hydrophobes Polymer ein Polymer mit in seinen Molekülketten eingebauten Estergruppen verwendet wird, welche Estergruppen bei erhöhter Temperatur nach Zerfall reaktiv werden und sowohl Umesterung des hydrophoben Polymers bewirken als auch, teilweise als quasi weiteres Polymer auftretend, mit einem Teil der Stärke bzw. der thermoplastisch verarbeitbaren Stärke reagieren. Die Reaktionsprodukte der so mit der Stärke reagierenden Molekülketten bilden dann den Phasenvermittler, der erneut für die molekulare Kopplung der beiden Phasen verantwortlich ist. Natürlich wäre es theoretisch möglich, wenn sämtliche Molekülketten des hydrophoben Polymers mit der Stärke reagieren würden, doch kann in der Regel davon ausgegangen werden, dass die Umesterungsreaktion der Veresterungsreaktion mit der Stärke vorgezogen wird, wodurch nur ein Teil des hydrophoben Polymers zum Phasenvermittler umgesetzt wird. Erneut wird im schlussendlich hergestellten Polymerblend der Phasenvermittler in der Grössenordnung von ca. 5 bis 50Gew%, bezogen auf das Gesamtgewicht des hydrophoben Polymers, anwesend sein.

Als Beispiel hierzu sei Polycaprolacton genannt, welches in den Molekülketten Estergruppen enthält, welche beispielsweise bei einer Temperatur von ca. 190°C vermutlich die obgenannte Umesterungsreaktion mit der Stärke eingehen können.

Verallgemeinernd ergibt sich insbesondere aus dem oben Ausgesagten, dass in der erfindungsgemässen Polymermischung der Phasenvermittler durch Stärke bzw. thermoplastisch verarbeitbare Stärke mit aufgepropftem aliphatischem Polyester gebildet werden kann, beispielsweise erhalten durch Umsetzung von Polycaprolacton mit der Stärke. Dabei hat es sich gezeigt, dass, je mehr Stärke mit aufgepropftem Polyester vorhanden ist, um so stärker die Wasserresistenz der Polymermischung erhöht werden kann.

Die erfindungsgemäss vorgeschlagenen Polymermischungen können selbstverständlich mit x-beliebigen Additiven, Zusätzen, Füllstoffen, Pigmenten etc. versetzt werden, wie sie allgemein bei Polymeren, wie insbesondere bei thermoplastisch verarbeitbaren Kunststoffen, bekannt sind. Da deren Einsatz stark verwendungsabhängig ist und zudem derartige Zusätze aus der Praxis bestens bekannt sind, wird auf deren Verwendung im Zusammenhang mit den erfindungsgemäss definierten Polymermischungen, mit der Ausnahme von Weichmachern, nicht näher eingegangen. Es versteht sich von selbst, dass bei der Forderung von biologischer Abbaubarkeit der Polymermischungen dieser Eigenschaft selbstverständlich beim Einsatz derartiger Zusätze und Additive ebenfalls die nötige Beachtung geschenkt werden muss, ansonsten natürlich die biologische Abbaubarkeit darunter leiden würde.

Als Additiv erwähnenswert ist insbesondere das Zumischen eines Weichmachers, der mit dem hydrophoben Polymer kompatibel ist und vorzugsweise dessen Schmelzviskosität erniedrigt. Einerseits liegt der Vorteil eines Weichmachers darin, dass das hydrophobe, biologisch abbaubare Polymer durch den Weichmacher weniger spröd ist und zudem bei der Herstellung des Polymerblends die quasi Enkapsulierung der thermoplastisch verarbeitbaren Stärke durch die hydrophobe Phase durch die Herabsetzung von der Viskosität begünstigt wird.

Für die Herstellung der oben erwähnten erfindungsgemässen, biologisch abbaubaren Polymermischungen eignet sich insbesondere das Verfahren gemäss dem Wortlaut nach Anspruch 15.

Bevorzugte Ausführungsvarianten des erfindungsgemässen Verfahrens sind in den abhängigen Ansprüchen 16 bis 23 charakterisiert.

Für die Herstellung der erfindungsgemässen. biologisch abbaubaren Polymermischung kann entweder von nativer Stärke ausgegangen werden oder aber von thermoplastisch verarbeitbarer Stärke, wie beispielsweise definiert in der intemationalen Patentanmeldung WO90/05161.

Im Falle, dass von nativer Stärke ausgegangen wird, muss diese zunächst unter Zuhilfenahme mindestens eines Plastifizier- oder Quellmittels aufgeschlossen werden wobei für dieses Aufschliessen die native Stärke einen Wassergehalt von < 10%. besser < 6Gew%, aufweisen sollte. Allerdings kann ein gewisser Wassergehalt in der genannten Grössenordnung von bis zu 6Gew% für das Aufschliessen der nativen Stärke, beispielsweise mit Glycerin oder Sorbitol. durchaus vorteilhaft sein. Anschliessend wird die so hergestellte Mischung zur Bildung der thermoplastisch verarbeitbaren Stärke aufgeschmolzen und mechanisch gemischt, wobei nun der Wassergehalt jedoch auf unter 1Gew%, vorzugsweise < 0,5Gew%. bezogen auf das Gesamtgewicht der Mischung, zu reduzieren ist und anschliessend das Mischen bis zum Erreichen einer homogenen Masse weitergeführt wird.

Die thermoplastisch verarbeitbare Starke wird nun zusammen mit mindestens einem biologisch abbaubaren hydrophoben Polymeren, das thermoplastisch verarbeitbar ist, und einem Phasenvermittler bzw. einem Dispergiermittel oder einem in der hydrophoben Polymerphase löslichen weiteren Polymeren mit gegenüber Stärke reaktiven Gruppen in der Schmelze gemischt, wobei als biologisch abbaubares hydrophobes Polymer mindestens ein aliphatischer Polyester vorliegt, und wobei vor oder beim Mischen der genannten Komponenten der Wassergehalt auf unter 1,0Gew%, besser < 0,5Gew%, bezogen auf das Gesamtgewicht der Mischung, reduziert wird, um so die erfindungsgemäss definierte, biologisch abbaubare Polymermischung zu erhalten, wobei im Falle der Verwendung eines weiteren Polymeres der Phasenvermittler in der Polymermischung durch Reaktion dieses weiteren Polymeres mit einem Teil der thermoplastisch verarbeitbaren Stärke gebildet wird.

Dass die Polymerblend-Herstellung im wesentlichen unter Ausschluss von Wasser erfolgt, ist wichtig, da ansonsten die Dispergierung der Stärke im hydrophoben Polymer unter Wirkung des Phasenvermittlers nicht richtig zustandekommt. So reagieren beispielsweise die Säureanhydridgruppen bei Anwesenheit von Wasser nicht mit der Stärke zur Bildung des Phasenvermittlers, sondem hydrolisieren. Damit wird aber die Bildung des Phasenvermittlers verhindert, womit, wie erwähnt, ein einwandfreies Dispergieren verunmöglicht wird. Das Vorliegen einer weitgehendst einwandfreien Dispersion im Polymerblend ist aber eine Voraussetzung für die erfindungsgemäss geforderten, guten mechanischen Eigenschaften der Mischung. Zudem besteht die Gefahr der Blasenbildung bei der Verarbeitung der Polymermischung. Ein Nachtrocknen des Polymerblends nach dessen Herstellung ist nicht dazu geeignet, eine infolge Feuchtigkeit fehlerhaft hergestellte Polymermischung nachträglich zu verbessern.

Für die Herstellung der erfindungsgemässen Polymermischung können bis zu 70Gew%, bezogen auf das Gesamtgewicht der Mischung, an thermoplastisch verarbeitbarer Stärke verwendet werden, um sicherzustellen, dass, wie oben gefordert, das hydrophobe Polymer immer noch weitgehendst als kontinuierliche Phase vorliegt. Die restlichen Anteile in der erfindungsgemässen Polymermischung werden einerseits durch das hydrophobe Polymer eingenommen und anderseits durch den Phasenvermittler, welcher, bezogen auf das Gewicht der hydrophoben Polymerphase, 2 bis 100Gew%, vorzugsweise 5 bis 50Gew%, ausmachen kann. Entsprechend werden bei der Herstellung der Polymermischung entweder 2 bis 100Gew%, bezogen auf das Gewicht der hydrophoben Polymerphase, von einem Phasenvermittler zugesetzt oder aber dieselben Gewichtsprozente eines weiteren Polymeren, das die reaktiven Gruppen umfasst, um durch Reaktion mit Teilen der Stärke den Phasenvermittler in der Polymermischung zu bilden.

Währenddem für die Herstellung der thermoplastisch verarbeitbaren Stärke die Stärke mit dem Quell- oder Plastifiziermittel in einem Temperaturbereich in der Grössenordnung von 150 bis 190°C gemischt wird, erfolgt das Mischen der thermoplastisch verarbeitbaren Stärke mit dem hydrophoben Polymeren und dem Phasenvermittler resp. dem weiteren Polymeren in einem Temperaturbereich in der Grössenordnung von 150 bis 230°C. Die zu wählende Mischtemperatur richtet sich dabei im wesentlichen nach der Verarbeitungstemperatur des gewählten hydrophoben Polymeres, weshalb beispielsweise bei der Verwendung von Cellulosederivaten eher eine Temperatur in der Grössenordnung von 190 bis 220°C verwendet wird, währenddem bei Verwendung von Polycaprolacton die Herstellung der erfindungsgemässen Polymermischung vorzugsweise in einem Bereich von ca. 150°C bis 190°C erfolgt. In bezug auf die zu verwendenden hydrophoben Polymeren sei auf die im Zusammenhang mit der Charakterisierung der erfindungsgemässen Polymermischungen angeführte Liste betreffend geeignete hydrophobe Polymere verwiesen.

Ebenfalls, wie bereits bei der Charakterisierung der verschiedenen erfindungsgemässen Polymermischungen angeführt, können grundsätzlich-Polymermischungen mit zwei verschiedenen Arten von Phasenvermittlern erzeugt werden. Gemäss einer ersten Variante wird die thermoplastisch verarbeitbare Stärke mit vorzugsweise 5 bis 50Gew%, bezogen auf das Gewicht des hydrophoben Polymeres, von einem Block-Copolymeren als Phasenvermittler versetzt, welcher Phasenvermittler mindestens aus einem in der Stärkephase löslichen Block und einem in der hydrophoben Polymerphase löslichen Block besteht, wie beispielsweise ein Polycaprolacton/Polyvinylalkohol-Copolymer, wobei schlussendlich, zusammen mit dem Phasenvermittler, das mindestens eine hydrophobe Polymer, wie beispielsweise Polycaprolacton, beigemischt wird. Selbstverständlich können auch andere Phasenvermittler als der obgenannte verwendet werden, wie beispielsweise teilhydrolisiertes Polyvinylacetat oder ein Polyvinylacetat/Polyvinyl-Pyrrolidyn-Blockcopolymer, wesentlich dabei ist, dass der verwendete Phasenvermittler mindestens je einen Block enthält, der je in einer der beiden Phasen löslich ist.

Im anderen Falle werden entweder zunächst auf einem hydrophoben Polymer, geeignet für die Herstellung der erfindungsgemässen Polymermischung, mittels Vinylpolymerisation oder Kondensation durch Umsetzen mit einem Glycidyläther oder mindestens einem aliphatischen Di- oder Polycarbonsäureanhydrid, wie beispielsweise Bernsteinsäureanhydrid, die reaktiven Gruppen aufgepropft, wobei das so gebildete weitere Polymer zusammen mit dem hydrophoben Polymer und thermoplastisch verarbeitbarer Stärke in der Schmelze bei einem Wassergehalt von < 0,5, vorzugsweise < 0,1%, intensiv gemischt werden. Oder aber es wird ein hydrophobes Polymer verwendet, mit in seinen Molekülketten eingebauten Estergruppen, welche Estergruppen bei erhöhter Temperatur nach Zerfall reaktiv werden und sowohl zu einer Umesterung des hydrophoben Polymers führen als auch, intermediär als weiteres Polymer auftretend. teilweise mit einem Teil der Stärke bzw. der thermoplastisch verarbeitbaren Stärke zur Bildung des Phasenvermittlers reagieren. Entsprechend wird ein hydrophobes Polymer mit in seinen Molekülketten eingebauten Estergruppen ebenfalls mit der thermoplastisch verarbeitbaren Stärke in der Schmelze und mit dem oben erwähnten tiefen Wassergehalt intensiv gemischt. Dieses Mischen erfolgt beispielsweise in einer kunststoffverarbeitenden Vorrichtung bzw. Maschine, wie einem Kneter oder einem Extruder, wobei bei diesem Mischvorgang die reaktiven Gruppen des genannten weiteren Polymeres bzw. die zerfallenden eingebauten Estergruppen mit einem Teil der Stärke bzw. der thermoplastisch verarbeitbaren Stärke für die Herstellung des Phasenvermittlers reagieren. Wesentlich ist dabei, dass es sich bei Verwendung eines weiteren Polymeren mit den reaktiven Gruppen um ein Polymer handelt, das weitgehendst in der hydrophoben Polymerphase löslich ist resp. mit dieser gut mischbar ist. Bei Verwendung eines Polymeren mit in seinen Molekülketten eingebauten Estergruppen ergibt sich dies von selbst.

Für die Herstellung eines weileren Polymeren kann beispielsweise von Aethylcellulose ausgegangen werden, welche mit Oelsäure gemischt wird oder generell mit einer ungesättigten Fettsäure bzw. einem entsprechenden Triglycerid. Mittels radikalischer Reaktion der Vinylgruppen werden der Aethylcellulose die Maleinsäure-Anhydridgruppen aufgepropft, welche, wie oben erwähnt, befähigt sind, mit der Stärke zu reagieren, um so den Phasenvermittler zu bilden.

Als Beispiel für ein hydrophobes Polymer mit in seinen Molekülketten eingebauten Estergruppen sei Polycaprolacton erwähnt, dessen Estergruppen ab einer gewissen Temperatur Umesterungsreaktionen mit der Stärke zulassen.

Gemäss einer weiteren Ausführungsvariante der Erfindung ist es möglich, eine erfindungsgemässe Polymermischung durch Mischen von thermoplastisch verarbeitbarer Stärke mit einem hydrophoben Polymer herzustellen, wobei als hydrophobes biologisch abbaubares Polymer mindestens ein aliphatischer Polyester vorliegt und wobei das Polymer, wenigstens nahezu ausschliesslich aus Makromolekülen besteht, die gegenüber der Stärke reaktive Gruppen aufweisen. In diesem Falle sind das hydrophobe Polymer und der Phasenvermittler in der erfindungsgemässen Polymermischung weitgehendst identisch. Allerdings muss natürlich auch in diesem Falle das hydrophobe Polymer bzw. der Phasenvermittler in der Polyermischung einen derartigen Anteil aufweisen, dass, wie erfindungsgemäss gefordert, die Stärke nach wie vor als disperse Phase vorliegt mit dem hydrophoben Polymer bzw. dem Phasenvermittler als kontinuierliche Phase, wobei durch die Bindungen zwischen dem hydrophoben Polymeren und einem Teil der Stärkemoleküle die molekulare Kopplung der beiden Phasen gegeben ist.

Um auf das oben erwähnte Beispiel der mittels Oelsäure umgesetzten Aethylcellulose zurückzukommen, wird entsprechend für die Herstellung des Polymerblends ausschliesslich Aethylcellulose verwendet, welche angehängte Maleinsäureanhydridgruppen umfasst. Je nach gewählter Verarbeitungstemperatur, Mischungsverhältnis und Verarbeitungsdauer wird entsprechend mehr oder weniger Phasenvermittler gebildet, wobei, wie erwähnt, in jedem Falle zu beachten ist, dass die Stärke nach wie vor als disperse Phase vorliegt. Unter die Betrachtungsweise, dass das hydrophobe Polymer und das weitere Polymer weitgehendst identisch sind, kann natürlich auch derjenige Fall gereiht werden, wo, wie erwähnt, das hydrophobe Polymer in seinen Molekülketten eingebaute Estergruppen enthält.

Gemäss einer weiteren Variante des erfindungsgemässen Verfahrens hat es sich als vorteilhaft erwiesen, wenn das hydrophobe Polymer vor dem Mischen mit der Stärke bzw. der thermoplastisch verarbeitbaren Stärke mit einem Weichmacher versetzt wird. Dabei ist es vorteilhaft, wenn der gewählte Weichmacher wenigstens weitgehendst nur mit dem hydrophoben Polymer kompatibel ist, d.h. nur in der hydrophoben Phase löslich ist. Im weiteren hat es sich als vorteilhaft erwiesen, wenn der gewählte Weichmacher die Schmelzviskosität des hydrophoben Polymers emiedrigt. Es liegt die Vermutung nahe, dass die Bildung einer Dispersion mit der Stärke als disperse Phase und mit dem hydrophoben Polymer als kontinuierliche Phase zusätzlich begünstigt wird, wenn das hydrophobe Polymer mit einem Weichmacher versetzt ist, der dessen Schmelzviskosität erniedrigt. In der Regel bildet bekanntlich die Phase mit der geringeren Viskosität in einer Dispersion die kontinuierliche Phase.

Auch im Zusammenhang mit den erfindungsgemäss definierten Verfahren wird auf die Darstellung von gefüllten, eingefärbten, verstärkten etc. Polymeren verzichtet, da die Darstellung derartiger Polymermischung in der kunststoffverarbeitenden Industrie bestens bekannt sind.

Die vorab erfindungsgemäss definierten, biologisch abbaubaren Polymermischungen eignen sich sowohl für Spritzguss- wie auch für Extrusionsanwendungen, wobei an dieser Stelle speziell auf die Herstellung von Ein- oder Mehrschichtfolien verwiesen wird. Dabei besteht mindestens eine Schicht einer derartigen Folie aus einer Polymermischung nach einem der Ansprüche 1 bis 15. Denkbar ist also eine Einschichtfolie, gänzlich hergestellt aus einer erfindungsgemässen Polymermischung, oder aber beispielsweise eine Dreischichtfolie, umfassend eine zentrale Mittelschicht, hergestellt beispielsweise ausschliesslich aus thermoplastisch verarbeitbarer Stärke, währenddem die beiden äusseren, die Stärkeschicht überdeckenden Schichten aus einer Polymermischung, wie erfindungsgemäss definiert, hergestellt sein können. Damit kann eine weitgehendst wasserresistente Folie hergestellt werden, die ingesamt 80Gew% oder sogar mehr aus thermoplastisch verarbeitbarer Stärke besteht und die insgesamt den geforderten Ansprüchen an biologische Abbaubarkeit entspricht.

Die Erfindung wird nun anschliessend teilweise unter Bezug auf die beigefügten Figuren und anhand von theoretischen Ueberlegungen und praktischen Beispielen näher erläutert.

Die beigefügten Figuren zeigen dabei:

Fig. 1 schematisch dargestellt, die Morphologie einer erfindungsgemässen Polymermischung;

Fig. 2 schematisch dargestellt, den Mechanismus der Phasenvermittlung in einer erfindungsgemässen Polymermischung;

Fig. 3 schematisch dargestellt, ein repräsentatives Spannungs/Dehnungsdiagramm für die Ermittlung der mechanischen Eigenschaften von mittels erfindungsgemässer Polymermischung hergestellten Prüfkörpern;

Fig. 4 und 5 Molekulargewichtsverteilungen von Polycaprolacton - unvorbehandelt und vorbehandelt durch Umesterung;

Fig. 6 die biologische Abbaubarkeit einer erfindungsgemässen Polymermischung im Vergleich zu Cellulose; und

Fig. 7 die biologische Abbaubarkeit von Cellulose im Vergleich zu verschiedenen, sogenannt biologisch abbaubaren Polymeren.

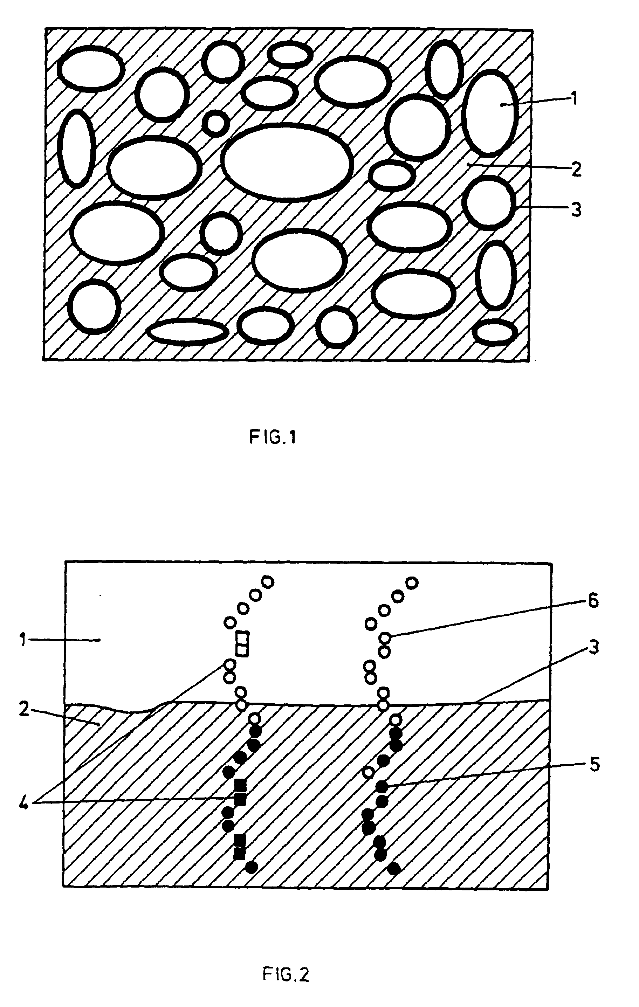

Zunächst soll unter Bezug auf die Figuren 1 und 2 noch einmal kurz auf die grundsätzliche Problematik bzw. auf die Aufgabenstellung der vorliegenden Erfindung eingegangen werden, welche zur Darstellung der erfindungsgemäss definierten Polymermischungen geführt hat.

Die Inkompatibilität der thermoplastisch verarbeitbaren Stärke mit hydrophoben Polymeren kann, wie schematisch in Fig. 1 dargestellt, genutzt werden, um sie in einer Matrix aus einem hydrophoben Material zu dispergieren. Bei dieser Struktur ist zu erwarten, dass die Quellung der thermoplastisch verarbeitbaren Stärke bei Lagerung unter Wasser bzw. die Wasserdampfsorption wirksam eingeschränkt werden kann. Die schematische Darstellung der Morphologie einer erfindungsgemässen Polymermischung zeigt einerseits die thermoplastisch verarbeitbare Stärke 1 als disperse Phase und das hydrophobe Polymer 2 als kontinuierliche Phase.

Die dabei auftretende Grenzfläche 3 ist stark vergrössert und schematisch in Fig. 2 dargestellt. Die disperse Verteilung der thermoplastisch verarbeitbaren Stärke 1 im hydrophoben Polymer 2 wird unter Wirkung des Phasenvermittlers 4 ermöglicht, welcher Phasenvermittler 4 ein mit der thermoplastisch verarbeitbaren Stärke 1 mischbares Segment 6 umfasst sowie ein mit dem hydrophoben Polymeren 2 mischbares Segment 5. Die Phase mit der geringeren Viskosität bildet dabei in der Regel die kontinuierliche Phase, weshalb es gegebenenfalls angezeigt ist, dem hydrophoben Polymer ein viskositätsvermindemdes Additiv zuzusetzen, wie beispielsweise einen Weichmacher. Dabei ist es vorteilhaft, wenn dieser Weichmacher nur mit der hydrophoben Phase kompatibel ist, um so die Viskositätserniedrigung gezielt in der hydrophoben Phase zu bewirken.

Die exakte Teilchengrösse der einzelnen Phasen, wie in Fig. 1 dargestellt, wird durch das rheologische Verhalten der einzelnen Phasen, die Art des Mischvorganges und durch die Grenzflächenenergie bestimmt. Aufgrund der thermodynamisch bedingten Inkompatibilität der thermoplastisch verarbeitbaren Stärke mit dem hydrophoben Polymer findet an der Phasengrenze nur eine geringe Mischung der beiden Polymere statt, was in der Regel zu einer Verschlechterung der mechanischen Eigenschaften einer Mischung der beiden Substanzen führt. Es ist aus diesem Grunde notwendig, dass eine ausreichende mechanische Koppelung der beiden Phasen bzw. eine geringe Grenzflächenenergie erreicht wird, was durch die Verwendung des in Fig. 2 schematisch dargestellten Blockcopolymeren bzw. Phasenvermittlers erreicht werden kann. Dieser Phasenvermittler durchdringt die Phasengrenze 3. In der Regel bestehen diese Phasenvermittler aus zwei Blöcken, die jeweils mit einem der beiden Polymere ausreichend kompatibel sind.

Anhand der nachfolgenden Beispiele soll nun die Darstellung von erfindungsgemäss definierten Polymermischungen näher erläutert werden, wobei die oben angeführten grundsätzlichen, theoretischen Ueberlegungen berücksichtigt werden, um die aufgabengemäss geforderten guten Eigenschaften einer thermoplastisch verarbeitbaren, biologisch abbaubaren Polymermischung zu erhalten.

1. Polymerblend, hergestellt aus thermoplastisch verarbeitbarer Stärke und Polycaprolacton

Polycaprolacton (PCL) hat sich als geeignet für die Herstellung von Polymerblends mit thermoplastischer Stärke (TPS) erwiesen. Polycaprolacton ist ein Homopolymer von E-Caprolacton und ist gemäss Aussagen des Herstellers (Union Carbide) vollständig biologisch abbaubar, ungiftig und eignet sich für die Herstellung von Folien und als Polymeradditiv.

Für die Herstellung verschiedener Polymerblends wurden drei verschiedene TPS-Typen verwendet, und zwar nachfolgend bezeichnet als Glycerin-TPS, stehend für eine thermoplastisch verarbeitbare Stärke, beinhaltend 30Gew% Glycerin; als TPS-LSM 1 für eine thermoplastisch verarbeitbare Stärke, beinhaltend 15Gew% Glycerin und 15Gew% Sorbitol; sowie als TPS-LSM2 für eine thermoplastisch verarbeitbare Stärke, beinhaltend 30Gew% Sorbitol.

Alle drei TPS-Typen wurden im Verhältnis von 1 : 1 zusammen mit Caprolacton extrudiert, wobei für die durchgeführten Versuche die beiden Typen PCL 787 und PCL 767E der Union Carbide verwendet worden sind.

Um möglichst wasserfreie Bedingungen bei der Extrusion vorzufinden, wurde die thermoplastisch verarbeitbare Stärke vor dem Zusetzen des Polycaprolactons atmosphärisch entgast, womit der Wassergehalt deutlich unter 0,5Gew% zu liegen kam. Die Extrusion wurde auf einem Theysohn Doppelschraubenextruder vorgenommen, wobei für jede Mischung Proben mit verschiedenen Temperaturprofilen hergestellt worden sind. Gemittelt ist in etwa folgendes Temperaturprofil im Extruder gewählt worden:

80 bis 160° / 160 bis 170° / 180 bis 190° / 150 bis 180° / 130 bis 140° / 130°/100 bis 140°.

Der Durchsatz der verschiedenen Polymermischungen wurde zwischen 20kg/h bis 40kg/h variiert. Die Drehzahl im Extruder wurde in einem Bereich zwischen 170 und 300 Umdrehungen/min gewählt. Die eingebrachte Energie ergab somit einen Wert von ca. 270 bis 440W/kg Polymermischung. Der gemessene Wassergehalt betrug 0,26 bis 0,6Gew% $H_2O$.

Von den mit den drei TPS-Typen und den beiden PCL-Typen hergestellten Polymermischungen wurden anschliessend Folien geblasen, wobei aufgrund des tiefen Schmelzpunktes des PCL (ca. 60°C) die Abzugswalzen zu kühlen waren oder noch besser die Folien durch Hochziehen herzustellen waren. Mit den so hergestellten Folien wurden Zugprüfungen durchgeführt, um unter anderem Reissfestigkeit und Bruchenergie zu messen. Dabei wurden die Folien sowohl nach 24 Stunden konditioniert bei Raumtemperatur geprüft als nach 24 Stunden Wasserlagerung.

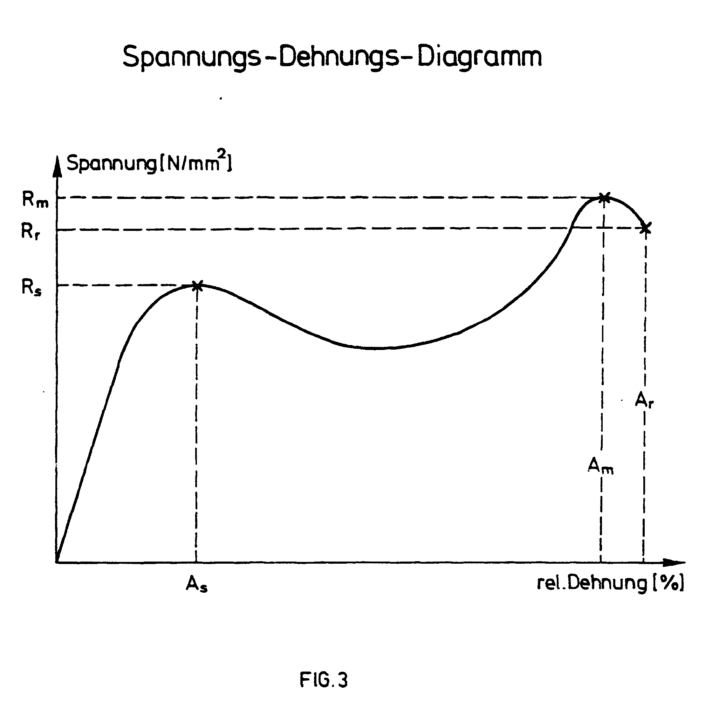

Um die nachfolgend in der Tabelle 2.1 zusammengefassten Messwerte der Zugversuche besser zu interpretieren, sei zunächst auf Fig. 3 verwiesen, in welcher schematisch ein Spannungs/Dehnungsdiagramm dargestellt ist. Die in der genannten Fig. 3 verwendeten Zeichen sind in der nachfolgenden Liste definiert:

Rs      Fliessgrenze

As      relative Dehnung an der Fliessgrenze

Rm      Höchstspannung

Am      relative Dehnung bei Höchstspannung

Rr      Reissspannung

Ar      relative Dehnung bei Bruch

Weiter bedeuten in der nachfolgenden Tabelle 2.1

d       Dicke der Folie

b       Breite der Folie für alle beurteilten Folien = 15,0mm

SO      Querschnitt der Folie (Bezugsgrösse für die Spannung)

W       Brucharbeit (proportional zur Fläche unter der Kurve gemäss Fig. 3)

N       Identifikation der gemessenen Folienprobe

Dabei bedeutet:

N = 1 Folie, hergestellt aus Glycerin-TPS und PCL, wobei die in der Tabelle 2.1 dargestellten Messwerte je einen Mittelwert, gemittelt über die von verschiedenen Proben gemessenen Werte darstellen, einerseits hergestellt mit den beiden PCL-Typen 787 und 767 E sowie bei den oben angeführten verschiedenen Extrusionsbedingungen.

N=2 Proben aus Glycerin TPS und PCL, nach 24 Stunden Wasserlagerung.

N = 3 Proben aus TPS, LSM 1 und PCL, 24 Stunden konditioniert bei Raumtemperatur,

N=4 Proben aus TPS, LSM 1/PCL nach 24 Stunden in Wasserlagerung,

N=5 TPS, LSM 2 und PCL, konditioniert 24 Stunden bei Raumtemperatur, und

N=6 TPS, LSM 2 und PCL nach 24 Stunden Wasserlagerung.

Tabelle 2.1

| N | Rs N/mm2 | As % | Rm N/mm2 | Am % | Rr N/mm2 | Ar % | d μm | SO mm2 | W J/m2 | E-Mod. N/mm2 |
|---|---|---|---|---|---|---|---|---|---|---|
| 1 | 10,4 | 25,5 | 25,7 | 781 | 25,7 | 782 | 47,0 | 0,72 | 5,30 | 220 |
| 2 | 13,5 | 5,8 | 14,1 | 5,0 | 14,0 | 6,0 | 45,0 | 0,68 | 0,11 | 630 |
| 3 | 15,4 | 7,9 | 19,2 | 607 | 19,2 | 607 | 22,3 | 0,35 | 4,35 | 693 |
| 4 | 18,6 | 10,2 | 20,1 | 290 | 17,9 | 317 | 19,9 | 0,32 | 3,17 | 359 |
| 5 | 19,0 | 10,3 | 21,7 | 615 | 20,7 | 685 | 92,2 | 1,38 | 6,52 | 717 |
| 6 | 12.7 | 13.0 | 22,4 | 675 | 18.0 | 785 | 90,7 | 1,21 | 7,08 | 468 |

Wie aus Tabelle 2.1 ersichtlich, zeigt der Glycerinblend im trockenen Zustand eine Reissfestigkeit von ca. $25 N/mm^2$ und eine Bruchenergie von ca. $5 J/m^2$. Nach 24 Stunden Wasserbad sinkt die Reissfestigkeit jedoch auf ca. $14 N/mm^2$ und die Bruchenergie sogar deutlich auf unter $1 J/m^2$ Dieser massive Abfall der mechanischen Werte kann eventuell auf ein Auswaschen von Glycerin zurückzuführen sein.

Demgegenüber zeigt die Folie, hergestellt aus TPS LSM 1 und PCL in trockenem Zustand eine Reissfestigkeit von ca. $19 N/mm^2$ und eine Bruchenergie um $4 J/m^2$. Auch im "eingeweichten" Zustand weichen die entsprechenden gemessenen Werte nur unwesentlich von den genannten ab, einzig die Bruchenergie sinkt auf ca. $3 J/m^2$.

Die Sorbitolfolie reisst bei ca. $21 N/mm^2$ bei einer Bruchenergie von ca. $6,5 N/mm^2$. Diese Werte verändern sich erfreulicherweise auch nach 24 Stunden Wasserbad nicht, d.h. sie nehmen eher noch zu.

Zum Vergleich sei noch erwähnt, dass Folien; hergestellt aus reinem Polycaprolacton eine Reissfestigkeit von ca. 18 bis $20 N/mm^2$ aufweisen und über eine Bruchenergie in der Grössenordnung von 7 bis $9 J/m^2$ verfügen.

Die mit thermoplastischer Stärke und Polycaprolacton im Verhältnis 1 : 1 auf einem Zweiwellenextruder hergestellten Polymermischungen eignen sich sowohl für Spritzguss, Breitschlitzextrusion als auch zum Blasen von Folien. Insbesondere die mit der Sorbitolstärke hergestellten Polymermischungen zeigen ausgezeichnete mechanische Eigenschaften, weshalb aufgrund der oben angeführten theoretischen Betrachtungen über Polymermischungen, beinhaltend zwei verschiedene Phasen, angenommen werden muss, dass sich an den Grenzflächen eine mechanische Koppelung der beiden Phasen einstellt.

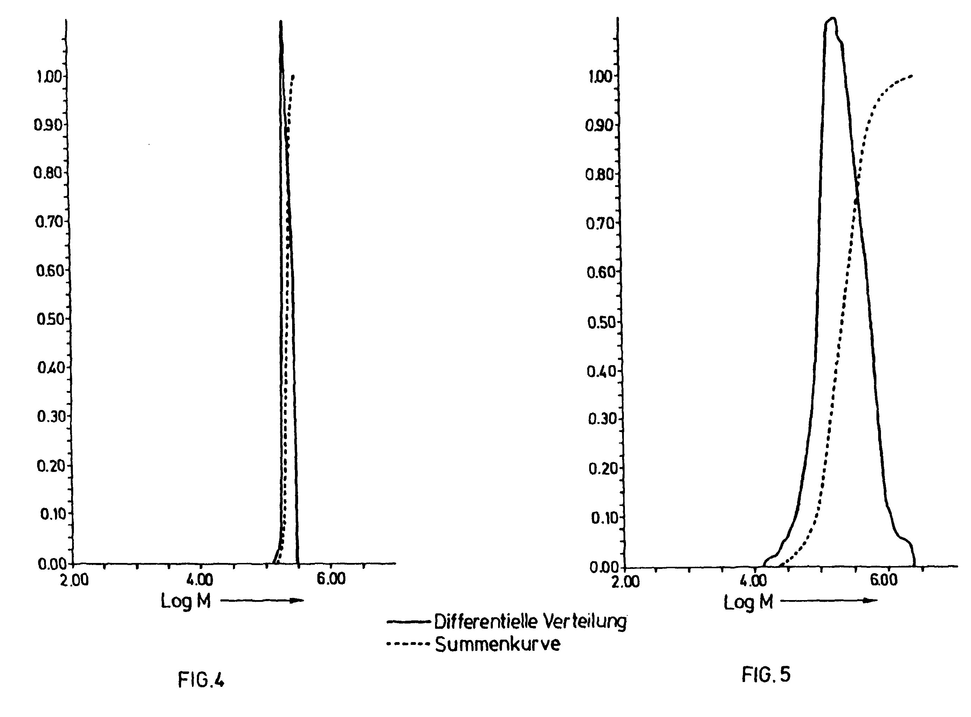

Es war also zu vermuten, dass die in den Molekülketten eingebauten Estergruppen im Polycaprolacton Veresterungsreaktionen mit der thermoplastischen Stärke eingehen, womit die so reagierenden Molekülketten mit der Stärke emeut den erfindungsgemäss erwähnten Phasenvermittler bilden. Diese Vermutung wurde durch den Umstand erhärtet, dass im Polycaprolacton ab einer gewissen Temperatur Umesterungsreaktionen einsetzen, was anhand von Molekulargewichtsverteilungen nachgewiesen werden konnte. Anhand der Molekulargewichtsverteilungen in den Fig. 4 und 5 soll dieser Umstand näher erläutert werden.

In Fig. 4 ist eine differentielle Molekulargewichtsverteilung von Poly-Epsilon-Caprolacton P787 der Union Carbide Corporation dargestellt, die nicht vorbehandelt ist. Das ermittelte mittlere Molekulargewicht beträgt dabei 215 500, das minimal gemessene Molekulargewicht 212 400 und das maximal ermittelte Molekulargewicht 218 600.

Das für die Ermittlung der Kurve in Fig. 4 verwendete Polycaprolacton wurde anschliessend auf 190°C erwärmt und anschliessend abgekühlt. Erneut wurde die Molekulargewichtsverteilung gemessen, welche nun in Fig. 5 dargestellt ist. Bereits anhand der Darstellung in Fig. 5 ist klar erkennbar, dass die Molekulargewichtsverteilung wesentlich breiter ist, womit bereits deutlich wird, dass eine interne Umlagerung der Molekülketten stattgefunden hat. Aufgrund der in der Molekülkette vorkommenden Estergruppen hat eine Umesterungsreaktion stattgefunden.

Die anhand der Verteilung von Fig. 5 ermittelten Werte ergaben folgendes Bild:

| | |
|---|---|
| Gewichtsmittel des Molekulargewichts | 280 000 |
| maximales Molekulargewicht | 538 400 und |
| minimales Molekulargewicht | 146 300. |

Da die interne Umesterungsreaktion der Molekülketten im Polycaprolacton in Konkurrenz stehen mit entsprechenden Veresterungsreaktionen mit der Stärke, ist es klar, dass somit beim Verarbeiten des Polycaprolactons mit der thermoplastischen Stärke ein Teil des Polycaprolactons mit der Stärke reagiert, wodurch sich, wie erfindungsgemäss gefordert, der Phasenvermittler bildet, welcher für die molekulare Kopplung der beiden Phasen verantwortlich ist. Das Vorhandensein von Reaktionsprodukten zwischen Polycaprolacton-Molekülketten mit der TPS konnte schlussendlich anhand eines Wänmeflussdiagrammes nachgewiesen werden, womit die oben angeführte Vermutung endgültig nachgewiesen werden konnte.

2. Messung der biologischen Abbaubarkeit bzw. Kompostierbarkeit einer beispielsweise hergestellten erfindungsgemässen Polymermischung

Die im Beispiel 2 verwendete erfindungsgemässe Polymermischung, bestehend aus einem 1 : 1 Gemisch zwischen Polycaprolacton und thermoplastisch verarbeitbarer Stärke, wobei letztere mit 30% Sorbitol destrukturiert worden ist, wurde einem Kompostierversuch bzw. der Bestimmung der biologischen Abbaubarkeit unterzogen. Vergleichsweise dazu wurde ebenfalls die biologische Abbaubarkeit von Cellulose gemessen.

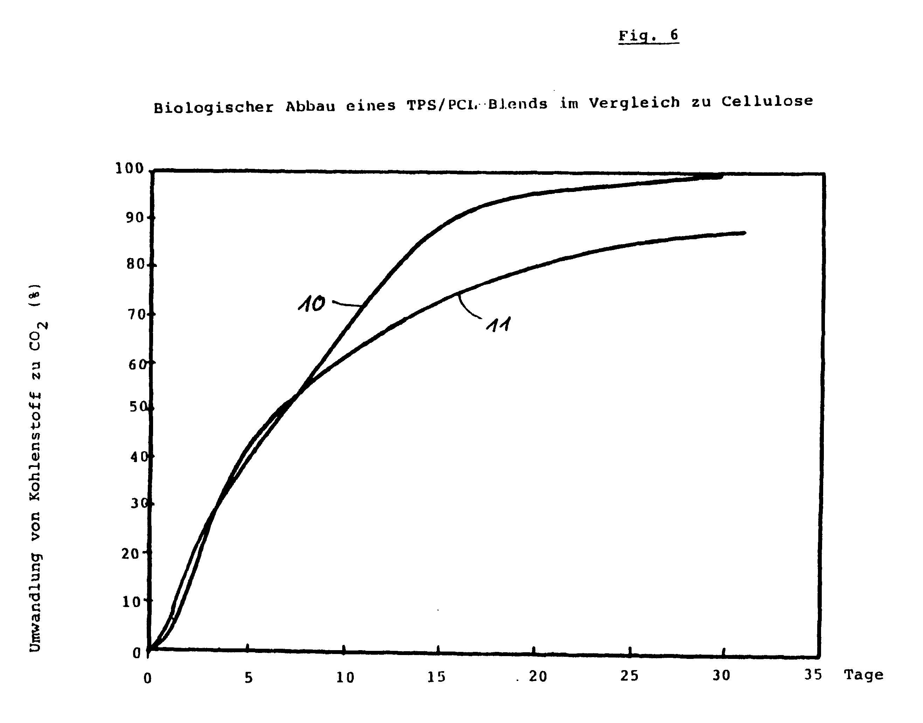

Die entsprechenden Resultate der Abbaubarkeit sind in Fig. 6 dargestellt, wobei der fortschreitende Abbau in Funktion der prozentualen Umwandlung von Kohlenstoff in $CO_2$ gemessen wurde. Das Diagramm von Fig. 6 zeigt also einerseits die Kompostierung der Caprolacton/TPS-Mischung, die durch die Kurve, bezeichnet mit 10, dargestellt ist. Im Vergleich dazu ist die Abbaubarkeit von Cellulose durch die Kurve, bezeichnet mit 11, dargestellt. Währenddem die PCL/TPS-Mischung bereits nach dreissig Tagen vollständig abgebaut ist, ist der Abbau von Cellulose nach dreissig Tagen noch nicht abgeschlossen. Die Messung der Abbaubarkeit erfolgte durch die Organic Waste Systems Inc. in Gent, Belgien, und als Messmethode wurde der amerikanische Standard AFTM D5338 verwendet.

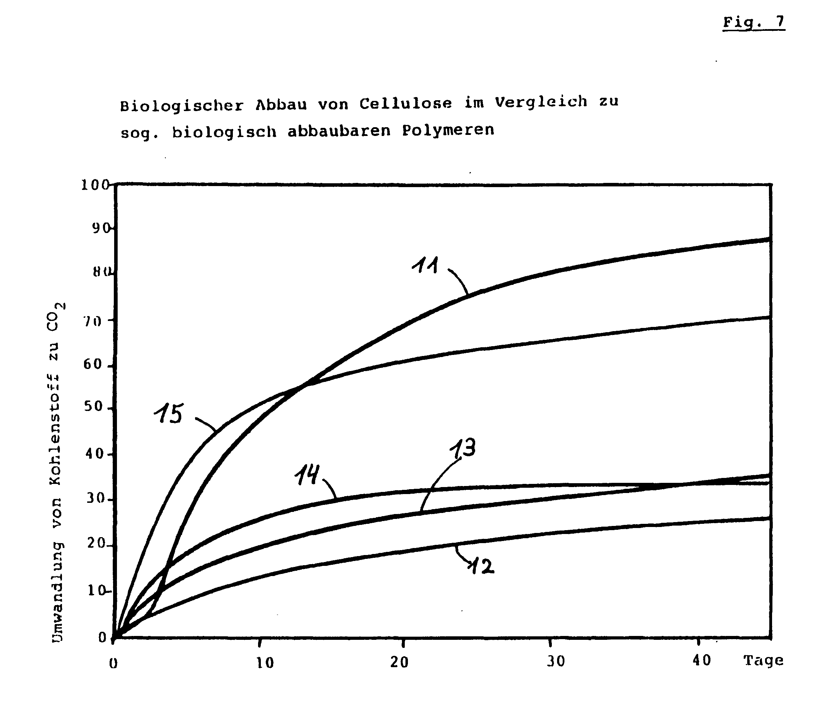

Um die hervorragende Abbaubarkeit der erfindungsgemäss hergestellten Polymermischung weiter zu dokumentieren, ist in Fig. 7 die biologische Abbaubarkeit von Cellulose im Vergleich zu verschiedenen, im Markt erhältlichen, sogenannten biologisch abbaubaren Polymeren dargestellt. Dabei bezeichnet wiederum die Kurve 11 den Abbau von Cellulose, währenddem sich die Kurve 12 auf ein erstes Muster bezieht, und zwar auf ein Material der Firma Novamont mit der Bezeichnung "Chart BI". Bei diesem Material handelt es sich um eine Mischung von ca. 50% thermoplastisch verarbeitbarer Stärke mit einem Aethylenvinylacetat-Copolymeren mit einem Hydrolysegehalt von ca. 75% sowie einem Anteil an Polyaethylen als Copolymeres. Die thermoplastisch verarbeitbare Stärke enthält u.a. Harnstoff, Sorbitol sowie Glycerin als Plastifiziermittel.

Die Kurven 13 und 14 beziehen sich auf Muster 2 und 3, umfassend Materialien der Bezeichnung "Mater BI" der Firma Novamont, wobei diese Materialien wiederum 50% thermoplastisch verarbeitbare Stärke enthalten, ca. 40% Polyvinylacetat (zu ca. 85% zu Polyvinylalkohol hydrolisiert) sowie ca. 10% Polyaethylen als Copolymeres.

Schlussendlich bezieht sich Kurve 15 auf ein viertes Muster der Firma Novon, wobei es sich um ein geschäumtes Material handelt, bestehend aus ca. 80% Stärke und ca. 20% Polyvinylacetat, wobei letzteres zu ca. 85% zu Polyvinylalkohol hydrolisiert ist.

Die Muster 1 bis 4 umfassen allesamt Materialien, die auf dem Markt als sogenannt biologisch abbaubare Polymere angeboten werden. Wie sich aus Fig. 7 deutlich ergibt, ist aber die biologische Abbaubarkeit zum Teil wesentlich schlechter als diejenige von Cellulose, deren Abbaubarkeit selbst ja wiederum, wie in Fig. 6 dargestellt, schlechter ist als die biologische Abbaubarkeit einer erfindungsgemäss hergestellten Polymermischung.

Auch die Kurven gemäss Fig. 7 wurden von dem OWS-Institut in Gent, Belgien, durchgeführt, und zwar entsprechend dem AFTM D5338 Standard.

Dass die hervorragende biologische Abbaubarkeit der erfindungsgemäss hergestellten PCL/TPS-Polymermischung nicht auf Kosten der mechanischen Eigenschaften erzielt wird, wird anhand der Werte in der nachfolgenden Tabelle 3.1 dokumentiert, in welcher Tabelle die mechanischen Eigenschaften einer PCL/TPS-Mischung im Vergleich zu den Eigenschaften der Muster 1 und 2 gemäss Fig. 7 angeführt sind. Dabei sind von den drei Materialien die Zugspannung bei Bruch, die Dehnung bei Bruch und die Energiedichte bei Bruch sowohl von "trokkenen" Materialien dargestellt wie auch von Materialien, die vierzig Stunden in Wasser gelagert worden sind.

Dabei bezeichnet Muster 6 die erfindungsgemäss hergestellte TPS/PCL-Polymermischung, deren biologische Abbaubarkeit in Fig. 6 anhand von Kurve 10 dargestellt ist.

Tabelle 3.1

| Aenderung der mechanischen Festigkeit von blasextrudierten Folien, "trocken" und nach Lagerung in Wasser | | | |
|---|---|---|---|
| | Zugspannung bei Bruch (MPa) | Dehnung bei Bruch (%) | Energiedichte infolge Bruchs (MJ/m$^3$) |
| Muster 1 | 31 | 174 | 4.9 |
| Muster 1 nach 40Std Lagerung im Wasser | 27 | 255 | 6.2 |
| Muster 2 | 16 | 176 | 2.3 |
| Muster 2 nach 40Std Lagerung im Wasser | 48 | 6 | 0.2 |
| Muster 6 | 21 | 650 | 6.5 |
| Muster 6 nach 40Std Lagerung im Wasser | 19 | 850 | 8.0 |

Aus Tabelle 3.1 ergibt sich deutlich, dass Muster 2 relativ stark bei der Lagerung in Wasser hydrolisiert wird bzw. dass das Material eine relativ schlechte Wasserbeständigkeit aufweist. Demgegenüber weisen Muster 1 und 6, d.h. insbesondere die erfindungsgemäss hergestellte Polymermischung, eine ausgezeichnete Wasserbeständigkeit auf. Auch die mechanischen Eigenschaften an sich sind weitgehendst identisch, wobei diejenigen von Muster 6 eher noch als besser einzustufen sind als diejenige des Musters 1.

Im übrigen wurde auch eine Probe von Muster 4 in die Testreihe miteinbezogen, jedoch war eine Lagerung in Wasser nicht möglich, da sich das Novon-Material bereits nach wenigen Minuten vollständig auflöste. Eine Messung der mechanischen Eigenschaften war dementsprechend nicht möglich.

Als Folgerung aus den Messungen gemäss Beispiel 3 ergibt sich klar, dass die biologische Abbaubarkeit der erfindungsgemäss hergestellten Polymermischung ausgezeichnet und wesentlich besser ist als die entsprechende Abbaubarkeit von heute im Markt angebotenen, sogenannt biologisch abbaubaren Polymeren. Weiter konnte nachgewiesen werden, dass diese hervorragende Kompostierbarkeit nicht auf Kosten der mechanischen Eigenschaften und der Wasserresistenz erzielt wurde.

Bei den vorab beschriebenen Beispielen handelt es sich selbstverständlich nur um eine kleine Auswahl von Möglichkeiten für die Darstellung eines erfindungsgemässen Polymerblends. Grundsätzlich ist es selbstverständlich möglich, irgendein hydrophobes, thermoplastisch verarbeitbares und biologisch weitgehendst abbaubares Polymer mit thermoplastischer Stärke zu mischen, wobei es aber wesentlich ist, dass für die Erzielung ausreichender mechanischer Eigenschaften der so hergestellten Polymermischung ein Phasenvermittler vorhanden sein muss, um die Grenzflächenenergie an der Phasengrenze zu verringern und dass als hydrophobes Polymer mindestesn ein aliphatischer Polyester vorliegt. Weiter wesentlich ist, dass das hydrophobe Polymer in der Mischung eine Matrix bildet, in welcher, enkapsuliert, die Stärke eingeschlossen ist.

Im weiteren hat es sich gezeigt, dass es erfindungswesentlich ist, dass die Herstellung des Polymerblends weitgehendst unter Ausschluss von Wasser erfolgt, um die Funktionsweise bzw. die Bildung des Phasenvermittlers nicht zu stören bzw. zu verhindern.

Nachfolgend soll ergänzend noch eine Liste von möglichen, heute im Handel erhältlichen, biologisch abbaubaren Polymeren angeführt sein:

Zein (Zein F 4000) der Firma Benzian AG, CH-6002 Luzem,

Ethylcellulose (Ethylcellulose N 50) der Firma Aqualon East BV, NL-2288 ER Rijswijk,

Poly-E-Caprolacton der Firma TONE-Polymers (Union Carbide Corporation),

Poly-L-Lactid der Firma PURAC biochem, NL-4200 AA Gorinchem,

Cellulosediacetat (mit unbekanntem Weichmacher) (BIOCETA) der Firma TUBIZE PLASTICS, B-1480 Tubize.

Die angeführte Liste wiedergibt nur einige Beispiele von biologisch abbaubaren Polymeren und ist selbstverständlich unvollständig. Selbstverständlich eignen sich auch alle z.B. synthetisch hergestellten hydrophoben Polymere für die Herstellung einer erfindungsgemässen Polymermischung mindestens enthaltend einen aliphatischen Polyester vorausgesetzt, dass sie biologisch abbaubar sind: Als Beispiel hierzu sei Polyhydroxibuttersäure genannt.

Schlussendlich ist noch zu ergänzen, dass eine Vielzahl der möglichen, biologisch abbaubaren Polymere vorteilhafterweise mit einem Weichmacher für die Herstellung eines erfindungsgemässen Polymerblends verwendet werden, da einerseits diese Polymere ohne Weichmacher sehr spröde sind und zudem sich die Verwendung eines Weichmachers als vorteilhaft erwiesen hat, nicht zuletzt, um die Schmelzviskosität zu verringern. So ist es beispielsweise fast unmöglich, Zein ohne Weichmacher zu verarbeiten, da dieses Material sehr spröde ist. Bei der Verwendung von Weichmachern ist es selbstverständlich von Vorteil, wenn dieser selbst ebenfalls biologisch abbaubar ist. Weiter zu beachten ist, dass, falls der Weichmacher hydrophil ist, die Zuschlagsmenge nicht einen gewissen Wert überschreitet, ansonsten die Wasserresistenz der ganzen Polymermischung entscheidend verschlechtert wird.

Als geeignete Weichmacher für die verschiedenen, biologisch abbaubaren hydrophoben Polymere haben sich u.a. die folgenden Substanzen angeboten:

- für Zein

  Palmitinsäure
  Glycerinmonostearat
  Sorbitol
  Triacetin
  Carvon
  1,2-Dodekandiol
  Laurinsäure
  Ethyllaevulinat
  Dibutyltartrat
  Sebacinsäure
  Diethyltartrat
  Butyllactat
  Polyethylenglykol
  E-Caprolactam
  Laevulinsäure
  E-Caprolacton
  Glycerin
  Triethylenglykol

- für Ethylcellulose

  Triacetin
  Castor Oil (Rizinusöl)
  Tributylcitrat
  Acetyltributylcitrat
  Bis(2-ethylhexyl)phthalat
  Bis(2-ethylhexyl)sebacat
  Dibutyladipat
  Palmitinsäure
  Laurylalkohol
  Diethyltartrat
  Triglycerid

- für Cellulose-Acetat-Butyrat

  Acetyl-tri-Aethylcitrat
  Triglycerid

Oelsäure-Derivate

Die aliphatischen Polyester werden in der Regel ohne Weichmacher verarbeitet.

Die oben angeführte Liste geeigneter Weichmacher soll eine Reihe möglicher Beispiele angeben, mittels welcher Substanzen biologisch abbaubare hydrophobe Polymere weichgemacht werden können. Selbstverständlich eignen sich teilweise die für ein Polymeres angeführten Weichmacher auch für andere biologisch abbaubare hydrophobe Polymere, wie beispielsweise eine Reihe für Aethyl-Cellulose geeignete Weichmacher ebenfalls geeignet sind für das Weichmachen von Cellulose-Acetat-Butyrat-Mischester.

**Patentansprüche**

1.   Biologisch abbaubare Polymermischung, mit einem Wassergehalt von weniger als 1 gew% bezogen auf das Gesamtgewicht der Mischung im wesentlichen bestehend aus thermoplastischer Stärke, enthaltend ein Plastifizier- oder Quellmittel in der Grössenordnung von 15 - 40 Gew.%, bezogen auf die Mischung Stärke/Plastifizier- oder Quellmittel, und mindestens einem biologisch abbaubaren hydrophoben Polymer, erhalten durch Mischen in der Schmelze von Stärke oder von thermoplastischer Stärke mit einem biologisch abbaubaren hydrophoben Polymer, das thermoplastisch verarbeitbar ist und einem Phasenvermittler, davon ausgenommen epoxidiertes Sojaöl, bzw. einem makromolekularen Dispergiermittel oder einem in der hydrophoben Polymerphase löslichen weiteren Polymer mit gegenüber Stärke reaktiven Gruppen, wobei als hydrophobes Polymer mindestens ein aliphatischer Polyester vorliegt, und wobei beim Mischen der Wassergehalt auf unter 1 Gew.%, bezogen auf das Gesamtgewicht der Mischung, reduziert wird, und wobei in der Mischung die Stärke als disperse Phase mit dem hydrophoben Polymer als kontinuierliche Phase vorliegt und der Phasenvermittler bzw. das Dispergiermittel für die molekulare Kopplung der beiden Phasen verantwortlich ist, bzw. wobei die reaktiven Gruppen des weiteren Polymers mit mindestens einem Teil der Stärke bzw. der thermoplastisch verarbeitbaren Stärke reagieren und so in der Mischung den Phasenvermittler bilden, der für die molekulare Kopplung der beiden Phasen verantwortlich ist.

2.   Biologisch abbaubare Polymermischung nach Anspruch 1, **dadurch gekennzeichnet, dass** die Stärke als sogenannte thermoplastisch verarbeitbare Stärke (TPS vorliegt, erhalten durch im wesentlichen wasserfreies Mischen von nativer Stärke mit mindestens einem Plastifizier- oder Quellmittel in der Grössenordnung von 15-40 Gew.%, vorzugsweise 20-36 Gew.%, bezogen auf die Mischung, mit nativer Stärke oder einem Derivat davon, welches Plastifizier- oder Quellmittel dazu geeignet ist, die Stärke bzw. das Derivat mindestens anzuquellen bzw. anzulösen.

3.   Polymermischung nach Anspruch 2, **dadurch gekennzeichnet, dass** die thermoplastisch verarbeitbare Stärke als Quell- oder Plastifiziermittel mindestens eine der nachfolgenden Substanzen enthält: Sorbitol, Glyzerin, eine Hydroxysäure, wie Milchsäure und/oder deren Salz und/oder Polyvinylalkohol.

4.   Polymermischung nach einem der Ansprüche 1 bis 3, **dadurch gekennzeichnet, dass** der Phasenvermittler ein Blockcopolymer ist, mindestens umfassend zwei Blöcke, wobei der eine Block in der hydrophoben Polymerphase wenigstens weitgehendst löslich ist und der andere Block wenigstens weitgehendst in der Stärkephase löslich ist.

5.   Polymermischung nach einem der Ansprüche 1 bis 3, erhalten durch im wesentlichen wasserfreies Mischen von Stärke bzw. thermoplastisch verarbeitbarer Stärke mit einem hydrophoben Polymer der genannten Art, umfassend in der Molekülkette eingebaute Estergruppen, welche bei erhöhter Temperatur nach Zerfall reaktiv werden und wenigstens teilweise mit mindestens einem Teil der Stärke bzw. der thermoplastisch verarbeitbaren Stärke reagieren, welche mit Stärke bzw. mit thermoplastisch verarbeitbarer Stärke reagierten Molekülketten des hydophoben Polymers so in der Mischung den Phasenvermittler bilden, der für die molekulare Kopplung der beiden Phasen verantwortlich ist.

6.   Polymermischung nach einem der Ansprüche 1 bis 5, **dadurch gekennzeichnet, dass** der Phasenvermittler durch Stärke bzw. thermoplastisch verarbeitbare Stärke mit aufgepfropftem aliphatischen Polyester gebildet wird.

7.   Polymermischung nach einem der Ansprüche 1 bis 6, **dadurch gekennzeichnet, dass** der Anteil an Stärke bzw. thermoplastisch verarbeitbarer Stärke bis zu 70 Gew.%, bezogen auf das Gesamtgewicht der Mischung, beträgt.

8.   Polymermischung nach einem der Ansprüche 1 bis 7, **dadurch gekennzeichnet, dass** der Anteil an Stärke bzw. thermoplastisch verarbeitbarer Stärke 30 bis 70, vorzugswseise 50 bis 65 Gew.%, bezogen auf das Gesamtgewicht der Mischung, beträgt.

9. Polymermischung nach einem der Ansprüche 1 bis 8, **dadurch gekennzeichnet, dass** der Anteil Phasenvermittler von 2 bis zu 100 Gew.%, bezogen auf das Gewicht des hydrophoben Polymers, vorzugsweise 5 bis 50 Gew.%, beträgt.

10. Polymermischung nach einem der Ansprüche 1 bis 9, **dadurch gekennzeichnet, dass** die Mischung mindestens thermoplastische Stärke sowie Polycaprolacton, Polyhydroxy-Buttersäure und/oder Polymilchsäure enthält.

11. Polymermischung nach einem der Ansprüche 1 bis 4 oder 8 bis 10, **dadurch gekennzeichnet, dass** als Phasenvermittler ein Polycaprolacton/Polyvinylalkohol-Copolymer vorgesehen ist.

12. Polymermischung nach einem der Ansprüche 1 bis 3 oder 5 bis 10, **dadurch gekennzeichnet, dass** die Mischung als Phasenvermittler ein Reaktionsprodukt aus Stärke bzw. thermoplastisch verarbeitbarer Stärke und einem weiteren Polymer mit gegenüber der Stärke reaktiven Epoxid-, Ester- oder Säureanhydridgruppen enthält.

13. Polymermischung nach Anspruch 12, **dadurch gekennzeichnet, dass** das weitere Polymer für die Bildung des Reaktionsproduktes mit gegenüber Stärke reaktiven Gruppen im wesentlichen aus einem Polymer nach Anspruch 10 besteht, auf welchem die reaktiven Epoxid- Ester- oder Säureanhydridgruppen durch Vinylpolymerisation oder durch Kondensation aufgepfropft sind.

14. Polymermischung nach einem der Ansprüche 1 bis 13, **dadurch gekennzeichnet, dass** die hydrophobe Phase bzw. das hydrophobe Polymer einen Weichmacher umfasst, der vorzugsweise nur mit der hydrophoben Phase kompatibel ist und selektiv deren Schmelzviskosität verringert.

15. Verfahren für die Herstellung einer biologisch abbaubaren Polymermischung, im wesentlichen bestehend aus Stärke und mindestens einem biologisch abbaubaren hydrophoben Polymer, **dadurch gekennzeichnet, dass** Stärke zusammen mit mindestens einem aliphatischen Polyester und einem Phasenvermittler bzw. makromolekularen Dispergiermittel, davon ausgenommen epoxidiertes Sojaöl, oder einem in der hydrophoben Polymerphase löslichen weiteren Polymeren mit gegenüber Stärke reaktiven Gruppen in der Schmelze gemischt wird, wobei vor oder beim Mischen der Wassergehalt auf < 1,0 Gew%, bezogen auf das Gewicht der Mischung, reduziert wird und wobei gegebenenfalls das weitere Polymer durch Reaktion mit der Stärke den Phasenvermittler bildet. Gew.%, vorzugsweise 5 bis 50 Gew.%, bezogen auf das Gewicht des hydrophoben Polymers, von einem Phasenvermittler und/oder einem weiteren Polymeren gemischt werden.

16. Verfahren nach Anspruch 15, **dadurch gekennzeichnet, dass** native Stärke oder Derivate davon mit mindestens einem Plastifizier- oder Quellmittel aufgeschlossen und zur Bildung von thermoplastisch verarbeitbarer Stärke in Schmelze gebracht gemischt wird, wobei der Wassergehalt vor oder beim Mischen auf < 1 Gew.%, vorzugsweise 0,5 Gew.%, reduziert wird und anschliessend bis zu 70 Gew.% dieser thermoplastisch verarbeitbaren Stärke mit dem hydrophoben Polymer und 2 bis 100

17. Verfahren nach einem der Ansprüche 15 oder 16, **dadurch gekennzeichnet, dass** das Mischen von Stärke bzw. von thermoplastisch verarbeitbarer Stärke mit dem hydrophoben Polymer und dem Phasenvermittler oder dem weiteren Polymer in einem Temperaturbereich von 150 bis 230°C erfolgt.

18. Verfahren nach einem der Ansprüche 15 bis 17, **dadurch gekennzeichnet, dass** die Stärke bzw. die thermoplastisch verarbeitbare Stärke mit 5 bis 50 Gew.%, bezogen auf das Gewicht des hydrophoben Polymers, von einem Block-Copolymeren als Phasenvermittler, mindestens bestehend aus einem in der Stärkephase löslichen Block und einem in der hydrophoben Polymerphase löslichen Block, wie beispielsweise Polycaprolacton/Polyvinylalkohol-Copolymer, und dem mindestens einen hydrophoben Polymer gemischt werden.

19. Verfahren nach einem der Ansprüche 15 bis 17, **dadurch gekennzeichnet, dass** auf dem hydrophoben Polymer mittels Vinylpolymerisation oder Kondensation durch Umsetzen mit einem Glyzidäther oder mindestens einem aliphatischen Di- oder Polycarbonsäureanhydrid, wie beispielsweise Bernsteinsäureanhydrid, die reaktiven Gruppen aufgepfropft werden, um das weitere Polymer zu erzeugen, und anschliessend das so erzeugte weitere Polymer und das hydrophobe Polymer mit der Stärke bzw. der thermoplastisch verarbeitbaren Stärke bei einem Wassergehalt von < 0,5 Gew%, vorzugsweise < 0,1 Gew%, in der Schmelze intensiv gemischt werden, wie beispielsweise in einer kunststoffverarbeitenden Vorrichtung bzw. Maschine, wie einem Kneter oder einem Extruder.

**20.** Verfahren nach einem der Ansprüche 15 bis 17, **dadurch gekennzeichnet, dass** als hydrophobes Polymer ein Polymer mit in seinen Molekülketten eingebauten Estergruppen verwendet wird, welche Estergruppen bei erhöhter Temperatur nach Zerfall reaktiv werden und sowohl Umesterung des hydrophoben Polymers bewirken als auch intermediär als weiteres Polymer auftreten, teilweise mit einem Teil der Stärke bzw. der thermoplastisch verarbeitbaren Stärke zur Bildung des Phasenvermittlers reagieren, wobei das die eingebauten Estergruppen enthaltende hydrophobe Polymer, wie beispielsweise Polycaprolacton, mit der Stärke bei einem Wassergehalt von < 0,5 Gew%, vorzugsweise < 0,1 Gew%, in der Schmelze intensiv gemischt wird, wie beispielsweise in einer kunststoffverarbeitenden Vorrichtung bzw. Maschine, wie einem Kneter oder einem Extruder.

**21.** Verfahren nach einem der Ansprüche 15 bis 20, **dadurch gekennzeichnet, dass** native Stärke oder Derivate davon mit einem Wassergehalt von maximal 6 Gew%, vorzugsweise 1 bis 4 Gew%, mit 25 bis 35 Gew.%, bezogen auf das Gewicht der Mischung, von einem Plastifizier- oder Quellmittel, wie Sorbitol oder Glyzerin, aufgeschlossen und anschliessend unter Reduktion des Wassergehaltes auf < 0,5 Gew% und auf eine Temperatur von ca. 170 bis 190°C gebracht, zur Herstellung von thermoplastisch verarbeitbarer Stärke gemischt wird, worauf der thermoplastisch verarbeitbaren Stärkeschmelze ca. 30 bis 45 Gew.% des hydrophoben Polymers und 5 bis 15 Gew.% des Phasenvermittlers oder 5 bis 20 Gew.% des weiteren Polymers, bezogen auf das Gesamtgewicht der Mischung inklusive der Stärke, zugemischt werden und in Schmelze in einem Temperaturbereich von ca. 150 bis 230°C bei einem Feuchtigkeitsgehalt von < 0,5 Gew%, vorzugsweise < 0,1 Gew%, gemischt werden.

**22.** Verfahren nach einem der Ansprüche 15 bis 17, oder 19 bis 21, **dadurch gekennzeichnet, dass** das hydrophobe Polymer und das weitere Polymer weitgehendst identisch sind.

**23.** Verfahren nach einem der Ansprüche 15 bis 22, **dadurch gekennzeichnet, dass** das hydrophobe Polymer vor dem Mischen mit der Stärke bzw. der thermoplastisch verarbeitbaren Stärke mit einem Weichmacher versetzt wird, wobei der Weichmacher vorzugsweise nur mit der hydrophoben Phase kompatibel ist bzw. in dieser mischbar ist und die Schmelzviskosität des hydrophoben Polymers reduziert.

**24.** Ein- oder Mehrschichtfolie, **gekennzeichnet durch** mindestens eine Schicht, bestehend aus einer Polymermischung nach einem der Ansprüche 1 bis 14.

**Claims**

**1.** A biologically decomposable polymer mixture, having a water content of less than 1 % by weight in relation to the total weight of the mixture, substantially consisting of thermoplastic starch, containing a plasticising or swelling agent in the order of 15 - 40 % by weight, in relation to the starch/plasticising or swelling agent mixture, and at least one biologically decomposable hydrophobic polymer, obtained by mixing in the melt of starch or of thermoplastic starch with a biologically decomposable hydrophobic polymer, which is able to be processed thermoplastically and with a phase agent excepting epoxided soya oil, or with a macromolecular dispersing agent or a further polymer which is soluble in the hydrophobic polymer phase, with groups reactive with respect to starch, in which at least one aliphatic polyester is present as hydrophobic polymer, and in which during mixing, the water content is reduced to below 1 % by weight in relation to the total weight of the mixture, and in which in the mixture the starch is present as a disperse phase with the hydrophobic polymer as continuous phase and the phase agent or the dispersing agent is responsible for the molecular coupling of the two phases, or in which the reactive groups of the further polymer react with at least one part of the starch or of the thermoplastically processable starch and thus form in the mixture the phase agent which is responsible for the molecular coupling of the two phases.

**2.** A biologically decomposable polymer mixture according to Claim 1, **characterised in that** the starch is present as so-called thermoplastically processable starch (TPS), obtained by substantially water-free mixing of native starch with at least one plasticising or swelling agent in the order of 15-40 % by weight, preferably 20-36 % by weight, in relation to the mixture, with native starch or a derivative thereof, which plasticising or swelling agent is suited to at least swelling or dissolving the starch or the derivative.

**3.** A polymer mixture according to Claim 2, **characterised in that** the thermoplastically processable starch contains as swelling or plasticising agent at least one of the following substances : sorbitol, glycerin, a hydroxy acid, such as lactic acid and or its salt, and/or polyvinyl alcohol.

**4.** A polymer mixture according to one of Claims 1 to 3, **characterised in that** the phase agent is a block copolymer, at least comprising two blocks, in which one block in the hydrophobic polymer phase is at least largely soluble and the other block at least largely soluble in the starch phase.

5. A polymer mixture according to one of Claims 1 to 3, obtained by substantially water-free mixing of starch or thermoplastically processable starch with a hydrophobic polymer of the said type, comprising ester groups incorporated in the molecule chain which become reactive at increased temperature after disintegration and react at least partially with at least a part of the starch or the thermoplastically processable starch, which molecule chains of the hydrophobic polymer, reacted with starch or with thermoplastically processable starch, thus form in the mixture the phase agent, which is responsible for the molecular coupling of the two phases.

6. A polymer mixture according to one of Claims 1 to 5, **characterised in that** the phase agent is formed by starch or thermoplastically processable starch with grafted aliphatic polyester.

7. A polymer mixture according to one of Claims 1 to 6, **characterised in that** the proportion of starch or thermoplastically processable starch amounts to up to 70 % by weight, in relation to the total weight of the mixture.

8. A polymer mixture according to one of Claims 1 to 7, **characterised in that** the proportion of starch or thermoplastically processable starch amounts to 30 to 70, preferably 50 to 65 % by weight, in relation to the total weight of the mixture.

9. A polymer mixture according to one of Claims 1 to 8, **characterised in that** the proportion of phase agent amounts to from 2 to 100 % by weight, in relation to the weight of the hydrophobic polymer, preferably 5 to 50 % by weight.

10. A polymer mixture according to one of Claims I to 9, **characterised in that** the mixture contains at least thermoplastic starch and also polycaprolacton, polyhydroxy butyric acid and/or polylactic acid.

11. A polymer mixture according to one of Claims 1 to 4 or 8 to 10, **characterised in that** as phase agent a polycaprolacton/polyvinyl alcohol copolymer is provided.

12. A polymer mixture according to one of Claims 1 to 3 or 5 to 10, **characterised in that** the mixture contains as phase agent a reaction product of starch or thermoplastically processable starch and a further polymer with epoxide-, ester- or acid anhydride groups reactive with respect to starch.

13. A polymer mixture according to Claim 12, **characterised in that** the further polymer for the formation of the reaction product with groups reactive with respect to starch consists substantially of a polymer according to Claim 10, on which the reactive epoxide-, ester- or acid anhydride groups are grafted by vinyl polymerisation or by condensation.

14. A polymer mixture according to one of Claims 1 to 13, **characterised in that** the hydrophobic phase or the hydrophobic polymer comprises a softener which is preferably only compatible with the hydrophobic phase and selectively reduces its melting viscosity.

15. A method for the manufacture of a biologically decomposable polymer mixture, substantially consisting of starch and at least of one biologically decomposable hydrophobic polymer, **characterised in that** starch together with at least one aliphatic polyester and a phase agent or macromolecular dispersing agent, excepting epoxided soya oil, or a further polymer soluble in the hydrophobic polymer phase with groups, reactive with respect to starch, is mixed in the melt, in which before or during mixing, the water content is reduced to < 1.0 % by weight, in relation to the weight of the mixture, and in which if necessary the further polymer forms the phase agent through reaction with the starch.

16. A method according to Claim 15, **characterised in that** native starch or derivatives thereof are decomposed with at least one plasticising or swelling agent and for the formation of thermoplastically processable starch is brought into melt, in which the water content before or during mixing is reduced to < 1 % by weight, preferably 0.5 % by weight and subsequently up to 70 % by weight of this thermoplastically processable starch are mixed with the hydrophobic polymer and 2 to 100 % by weight, preferably 5 to 50 % by weight, in relation to the weight of the hydrophobic polymer, of a phase agent and/or a further polymer.

17. A method according to one of Claims 15 or 16, **characterised in that** the mixing of starch or of thermoplastically processable starch with the hydrophobic polymer and the phase agent or the further polymer takes place in a temperature range of 150 to 230°C.

18. A method according to one of Claims 15 to 17, **characterised in that** the starch or the thermoplastically processable starch is mixed with 5 to 50 % by weight, in relation to the weight of the hydrophobic polymer, of a block copolymer as phase agent, at least consisting of a block soluble in the starch phase and a block soluble in the hydrophobic polymer phase, such as for example polycaprolacton/polyvinyl alcohol copolymer, and the at least one hydrophobic polymer.

19. A method according to one of Claims 15 to 17, **characterised in that** the reactive groups are grafted on the hydrophobic polymer by means of vinyl polymerisation or condensation through conversion with a glycide ether or at least one aliphatic di- or polycarboxylic acid anhydride, such as for example succinic acid anhydride, in order to produce the further polymer, and then the thus produced further polymer and the hydrophobic polymer are mixed intensively in the melt with the starch or the thermoplastically processable starch at a water content of < 0.5 % by weight, preferably < 0.1 %, such as for example in a plastic-processing device or machine, such as a kneader or an extruder.

20. A method according to one of Claims 15 to 17, **characterised in that** as hydrophobic polymer a polymer is used with ester groups incorporated in its molecule chains, which ester groups become reactive at increased temperature after decomposition and bring about both ester interchange of the hydrophobic polymer and also intermediately occurring as further polymer, partially react with a portion of the starch or the thermoplastically processable starch for the formation of the phase agent, in which the hydrophobic polymer, containing the incorporated ester groups, such as for example polycaprolacton, is mixed intensively with the starch at a water content of < 0.5 % by weight, preferably < 0.1 % by weight in the melt, such as for example in a plastic-processing device or machine, such as a kneader or an extruder.

21. A method according to one of Claims 15 to 20, **characterised in that** native starch or derivatives thereof with a water content of a maximum 6 % by weight, preferably 1 to 4 % by weight, with 25 to 35 % by weight, in relation to the weight of the mixture, of a plasticising or swelling agent, such as sorbitol or glycerin, is decomposed and then under reduction of the water content to < 0.5 % by weight and brought to a temperature of approximately 170 to 190°C, is mixed for the production of thermoplastically processable starch, after which there are added to the thermoplastically processable starch melt approximately 30 to 45 % by weight of the hydrophobic polymer and 5 to 15 % by weight of the phase agent or 5 to 20 % by weight of the further polymer, in relation to the total weight of the mixture including the starch, and are mixed in melt in a temperature range of approximately 150 to 230°C at a humidity content of < 0.5 % by weight, preferably < 0.1 % by weight.

22. A method according to one of Claims 15 to 17 or 19 to 21, **characterised in that** the hydrophobic polymer and the further polymer are largely identical.

23. A method according to one of Claims 15 to 22, **characterised in that** the hydrophobic polymer, before mixing with the starch or with the thermoplastically processable starch, is mixed with a softener, in which the softener preferably is only compatible with the hydrophobic phase or is miscible therein, and reduces the melting viscosity of the hydrophobic polymer.

24. A single- or multiple-sheet foil, **characterised by** at least one layer, consisting of a polymer mixture according to one of Claims 1 to 14.

**Revendications**

1. Mélange de polymères biodégradable, ayant une teneur en eau inférieure à 1% en poids par rapport au poids total du mélange, essentiellement composé d'amidon thermoplastique, contenant un agent plastifiant ou un agent gonflant dans une quantité de l'ordre de 15-40% en poids, par rapport au mélange amidon/agent plastifiant ou agent gonflant, et d'au moins un polymère hydrophobe biodégradable, obtenu par mélange à l'état fondu d'amidon ou d'amidon thermoplastique avec un polymère hydrophobe biodégradable, qui est thermoplastiquement transformable, un agent de compatibilisation de phases, à l'exception d'huile de soja époxydée, ou un agent dispersant macromoléculaire ou un autre polymère soluble dans la phase polymère hydrophobe, ayant des groupes aptes à réagir avec l'amidon, étant précisé qu'il est prévu en tant que polymère hydrophobe au moins un polyester aliphatique , que lors du mélange la teneur en eau est réduite à une valeur inférieure à 1% en poids par rapport

**EP 0 596 437 B2**

au poids total du mélange, et que dans le mélange, l'amidon est présent sous forme de phase dispersée avec le polymère hydrophobe comme phase continue, et l'agent de compatibilisation de phases ou l'agent dispersant est responsable du couplage moléculaire des deux phases ou les groupes réactifs de l'autre polymère réagissent avec au moins une partie de l'amidon ou de l'amidon thermoplastiquement transformable et forment ainsi, dans le mélange, l'agent de compatibilisation de phases qui est responsable du couplage moléculaire des deux phases.

2.  Mélange de polymères biodégradable selon la revendication 1, **caractérisé par le fait que** l'amidon se présente sous la forme d'amidon dit thermoplastiquement transformable (ATT), obtenu par mélange sensiblement anhydre d'amidon natif avec au moins un agent plastifiant ou un agent gonflant dans une quantité de l'ordre de 15-40% en poids, de préférence de 20-36% en poids, par rapport au mélange, avec de l'amidon natif ou un dérivé de celui-ci, lequel agent plastifiant ou agent gonflant est approprié au moins pour faire gonfler ou pour dissoudre l'amidon ou le dérivé.

3.  Mélange de polymères selon la revendication 2, **caractérisé par le fait que** l'amidon thermoplastiquement transformable contient, comme agent gonflant ou agent plastifiant, au moins l'une des substances suivantes : sorbitol, glycérine, un hydroxyacide, comme l'acide lactique et/ou un sel de celui-ci, et/ou l'alcool polyvinylique.

4.  Mélange de polymères selon l'une des revendications 1 à 3, **caractérisé par le fait que** l'agent de compatibilisation de phases est un copolymère séquencé, comprenant au moins deux séquences, où l'une des séquences est au moins le plus largement soluble dans la phase polymère hydrophobe, et l'autre séquence est au moins le plus largement soluble dans la phase amidon.

5.  Mélange de polymères selon l'une des revendications 1 à 3, obtenu par mélange sensiblement anhydre d'amidon ou d'amidon thermoplastiquement transformable avec un polymère hydrophobe du type cité, comprenant, dans la chaîne moléculaire, des groupes ester incorporés, lesquels deviennent réactifs à température élevée après décomposition, et réagissent au moins partiellement avec au moins une partie de l'amidon ou de l'amidon thermoplastiquement transformable, lesquelles chaînes moléculaires du polymère hydrophobe ayant réagi avec l'amidon ou avec l'amidon thermoplastiquement transformable forment ainsi dans le mélange l'agent de compatibilisation de phases qui est responsable du couplage moléculaire des deux phases.

6.  Mélange de polymères selon l'une des revendications 1 à 5, **caractérisé par le fait que** l'agent de compatibilisation de phases est formé par de l'amidon ou de l'amidon thermoplastiquement transformable avec un polyester aliphatique greffé.

7.  Mélange de polymères selon l'une des revendications 1 à 6, **caractérisé par le fait que** la fraction d'amidon ou d'amidon thermoplastiquement transformable s'élève jusqu'à 70% en poids, par rapport au poids total du mélange.

8.  Mélange de polymères selon l'une des revendications 1 à 7, **caractérisé par le fait que** la fraction d'amidon ou d'amidon thermoplastiquement transformable s'élève à 30 à 70, de préférence à 50 à 65% en poids, par rapport au poids total du mélange.

9.  Mélange de polymères selon l'une des revendications 1 à 8, **caractérisé par le fait que** la fraction de l'agent de compatibilisation de phases s'élève à 2 jusqu'à 100% en poids, par rapport au poids du polymère hydrophobe, de préférence à 5 à 50% en poids.

10. Mélange de polymères selon l'une des revendications 1 à 9, carcatérisé par le fait qu'il contient au moins de l'amidon thermoplastique ainsi que de la polycaprolactone, du poly(acide hydroxybutyrique) et/ou du poly( acide lactique).

11. Mélange de polymères selon l'une des revendications 1 à 4 ou 8 à 10, **caractérisé par le fait que**, comme agent de compatibilisation de phases est prévu un copolymère polycaprolactone/alcool polyvinyle.

12. Mélange de polymères selon l'une des revendications 1 à 3 ou 5 à 10, **caractérisé par le fait qu'**il contient, comme agent de compatibilisation de phases, un produit de réaction d'amidon ou d'amidon thermoplastiquement transformable et d'un autre polymère ayant des groupes époxyde, ester ou anhydride d'acide aptes à réagir avec l'amidon.

13. Mélange de polymères selon la revendication 12, **caractérisé par le fait que** l'autre polymère pour la formation

20

du produit de réaction ayant des groupes aptes à réagir avec l'amidon se compose essentiellement d'un polymère tel que défini à la revendication 10, sur lequel sont greffés, par polymérisation vinylique ou par condensation, les groupes réactifs époxyde, ester ou anhydride d'acide.

**14.** Mélange de polymères selon l'une des revendications 1 à 13, **caractérisé par le fait que** la phase hydrophobe ou le polymère hydrophobe comprend un agent ramollissant, qui est de préférence compatible seulement avec la phase hydrophobe et en diminue de façon sélective la viscosité à l'état fondu.

**15.** Procédé de fabrication d'un mélange de polymères biodégradable, se composant essentiellement d'amidon et d'au moins un polymère hydrophobe biodégradable, **caractérisé par le fait que** de l'amidon est mélangé à l'état fondu conjointement avec au moins un polyester aliphatique biodégradable et un agent de compatibilisation de phases ou un agent de dispersion macromoléculaire, à l'exception de l'huile de soja époxydée, ou un autre polymère soluble dans la phase polymère hydrophobe, ayant des groupes aptes à réagir avec l'amidon, où, avant ou lors du mélange, la teneur en eau est réduite à une valeur < 1,0% en poids, par rapport au poids du mélange, et où , le cas échéant, l'autre polymère forme, par réaction avec l'amidon, l'agent de compatibilisation de phases.

**16.** Procédé selon la revendication 15, **caractérisé par le fait que** de l'amidon natif ou des dérivés de celui-ci sont désagrégés par au moins un agent plastifiant ou un agent gonflant et mélangés, à l'état fondu, pour la formation d'amidon thermoplastiquement transformable, où la teneur en eau avant ou lors du mélange est réduite à une valeur < 1% en poids, de préférence 0,5% en poids et, ensuite, jusqu'à 70% en poids de cet amidon thermoplastiquement transformable sont mélangés avec le polymère hydrophobe et 2 à 100% en poids, de préférence 5 à 50% en poids, par rapport au poids du polymère hydrophobe, d'un agent de compatibilisation de phases et/ ou un autre polymère.

**17.** Procédé selon la revendication 15 ou 16, **caractérisé par le fait que** le mélange d'amidon ou d'amidon thermoplastiquement transformable avec le polymère hydrophobe et l'agent de compatibilisation de phases ou l'autre polymère, a lieu dans une plage de températures de 150 à 230°C.

**18.** Procédé selon l'une des revendications 15 à 17, **caractérisé par le fait que** l'amidon ou l'amidon thermoplastiquement transformable est mélangé avec 5 à 50% en poids, par rapport au poids du polymère hydrophobe, d'un copolymère séquencé en tant qu'agent de compatibilisation de phases, se composant au moins d'une séquence soluble dans la phase amidon et d'une séquence soluble dans la phase polymère hydrophobe, comme, par exemple, un copolymère polycaprolactone/ alcool polyvinylique, et ledit au moins un polymère hydrophobe.

**19.** Procédé selon l'une des revendications 15 à 17, **caractérisé par le fait que**, sur le polymère hydrophobe, au moyen d'une polymérisation vinylique ou d'une condensation par réaction avec un éther glycidylique ou au moins un anhydride d'acide dicarboxylique ou polycarboxylique aliphatique, comme, par exemple, l'anhydride d'acide succinique, sont greffés les groupes réactifs pour produire l'autre polymère, et, ensuite, l'autre polymère ainsi obtenu et le polymère hydrophobe sont mélangés de façon intensive à l'état fondu avec l'amidon ou l'amidon thermoplastiquement transformable, à une teneur en eau < 0,5% en poids, de préférence < 0,1% en poids, comme, par exemple, dans un dispositif ou une machine de transformation des matières plastiques, comme un malaxeur ou une extrudeuse.

**20.** Procédé selon l'une des revendications 15 à 17, **caractérisé par le fait que**, comme polymère hydrophobe, on utilise un polymère ayant des groupes ester incorporés dans sa chaîne moléculaire, lesquels groupes ester sont aptes à réagir à température élevée après décomposition et non seulement provoquent une transestérification du polymère hydrophobe, mais encore, se formant de façon intermédiaire comme autre polymère, réagissent partiellement avec une partie de l'amidon ou de l'amidon thermoplastiquement transformable en vue de la formation de l'agent de compatibilisation de phases, où le polymère hydrophobe contenant les groupes ester incorporés, comme, par exemple, la polycaprolactone, est mélangé de façon intensive à l'état fondu avec l'amidon, à une teneur en eau < 0,5% en poids, de préférence < 0,1% en poids, comme, par exemple, dans un appareillage ou une machine de transformation des matières plastique, comme un malaxeur ou une extrudeuse.

**21.** Procédé selon l'une des revendications 15 à 20, **caractérisé par le fait que** de l'amidon natif ou des dérivés de celui-ci, ayant une teneur en eau d'au maximum 6% en poids, de préférence de 1 à 4% en poids, sont désagrégés par 25 à 35% en poids, par rapport au poids du mélange, d'un agent plastifiant ou d'un agent gonflant, comme le sorbitol ou la glycérine, puis, une fois portés à une teneur en eau réduite à < 0,5% en poids et à une température d'environ 170 à 190°C, sont mélangés en vue de la fabrication d'amidon thermoplastiquement transformable, sur quoi à la masse fondue d'amidon thermoplastiquement transformable, environ 30 à 45% en poids du polymère hydrophobe et 5 à 15% en poids de l'agent de compatibilisation de phases ou 5 à 20% en poids de l'autre polymère, par rapport au poids total du mélange y compris l'amidon, sont incorporés et mélangés à l'état fondu dans une plage de températures d'environ 150 à 230°C avec une teneur en humidité < 0,5% en poids, de préférence < 0,1% en poids.

22. Procédé selon l'une des revendications 15 à 17 ou 19 à 21, **caractérisé par le fait que** le polymère hydrophobe et l'autre polymère sont le plus largement identiques.

23. Procédé selon l'une des revendications 15 à 22 **caractérisé par le fait que** le polymère hydrophobe est additionné d'un plastifiant avant le mélange avec l'amidon ou l'amidon thermoplastiquement transformable, le plastifiant étant, de préférence, compatible seulement avec la phase hydrophobe ou bien étant miscible avec celle-ci et réduisant la viscosité à l'état fondu du polymère hydrophobe.

24. Feuille à une ou plusieurs couches,
**caractérisé par le fait qu'**au moins une couche se compose d'un mélange de polymères tel que défini à l'une des revendications 1 à 14.

FIG.1

FIG.2

# Spannungs-Dehnungs-Diagramm

FIG. 3

EP 0 596 437 B2

FIG.4

FIG.5

———— Differentielle Verteilung
------ Summenkurve

Fig. 6

Biologischer Abbau eines TPS/PCL-Blends im Vergleich zu Cellulose

Umwandlung von Kohlenstoff zu $CO_2$ (%)

Tage

Fig. 7

Biologischer Abbau von Cellulose im Vergleich zu
sog. biologisch abbaubaren Polymeren

EP 0 596 437 B2